# EUROPÄISCHE PATENTSCHRIFT

(11) **EP 1 404 986 B1**
(45) Veröffentlichungstag und Bekanntmachung des Hinweises auf die Patenterteilung: **13.09.2006**
(21) Anmeldenummer: 02767185.8
(22) Anmeldetag: 08.07.2002
(51) Int. Cl.: F16D 57/04, B60T 1/087

(54) **VERFAHREN ZUR BESCHLEUNIGTEN ENTLEERUNG EINES HYDRODYNAMISCHEN RETARDERS UND HYDRODYNAMISCHER RETARDER**
METHOD FOR EMPTYING A HYDRODYNAMIC RETARDER IN AN ACCELERATED MANNER AND HYDRODYNAMIC RETARDER
PROCEDE DE VIDANGE ACCELEREE D'UN RALENTISSEUR HYDRODYNAMIQUE ET RALENTISSEUR HYDRODYNAMIQUE

(30) Priorität: 12.07.2001 DE 10133342
(43) Veröffentlichungstag der Anmeldung: 07.04.2004
(73) Patentinhaber: Voith Turbo GmbH & Co. KG, 89522 Heidenheim (DE)
(72) Erfinder: KAMOSSA, Kai, 74564 Crailsheim (DE); NEHER, Achim, 74564 Crailsheim (DE); MONDORF, Karl, 74564 Crailsheim (DE); LAUKEMANN, Dieter, 74541 Vellberg (DE); ADAMS, Werner, 74564 Crailsheim (DE)
(74) Vertreter: Koch-Huld, Annegret Christa
(86) Internationale Anmeldenummer: PCT/EP2002/007576
(87) Internationale Veröffentlichungsnummer: WO 2003/008832

(56) Entgegenhaltungen:
- WO-A-00/40872
- GB-A- 806 364
- US-A- 3 958 671
- US-A- 4 715 481

## Beschreibung

Die Erfindung betrifft ein Verfahren zur Beschleunigung des Entleerens eines Arbeitsraumes eines hydrodynamischen Retarders, im einzelnen mit den Merkmalen aus dem Oberbegriff des Anspruchs 1; ferner einen hydrodynamischen Retarder.

Hydrodynamische Retarder sind beispielsweise aus VDI Handbuch Getriebetechnik II, VDI-Richtlinien VDI 2153, Hydrodynamische Leistungsübertragung Begriffe - Bauformen - Wirkungsweisen, Kapitel 7, Bremsen oder Dubbel, Taschenbuch für den Maschinenbau, 18. Auflage, Seiten R49 bis R53 bekannt, deren Offenbarungsgehalt vollumfänglich in die Anmeldung mit einbezogen. Derartige Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. Die Entleerung erfolgt durch Unterbrechung der Zufuhr von Betriebsmittel zum Arbeitsraum aufgrund der Pumpwirkung der Rotorschaufelradrotation. Ein wesentlicher Nachteil dieses Verfahrens besteht aufgrund der Abhängigkeit von der Rotordrehzahl jedoch darin, daß der Retarderarbeitsraum zum einen nach der Bremsung nicht vollständig entleert wird und des weiteren die Entleerung nicht schnell genug erfolgt. Damit kann auch bei ausgeschaltetem Retarder noch ein Restmoment vorhanden sein, beispielsweise aufgrund einer umlaufenden Restölmenge. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Vermeidung der Ventilationsverluste sind bereits eine Reihe von Lösungen bekannt. Dazu gehören u.a. die Verwendung von Statorbolzen sowie die Möglichkeit einer vollständigen Kreislaufevakuierung.

Aus der Druckschrift DE 198 60 706 A1 ist dazu ein hydrodynamischer Retarder bekannt, bei welchem der Raum zwischen dem Auslaß und dem Auslassventil gezielt entleert wird, um ein Füllen des Retarderarbeitsraumes

im Nichtbremsbetrieb bei niedrigen Drehzahlen zu verhindern. Dies wird über Beaufschlagung dieses Raumes mit Druckimpulsen realisiert. Allerdings dient diese Lösung lediglich der Beeinflussung der Ventilationsverluste nach erfolgter Entleerung und ist ohne Einfluss auf die Zeitdauer des eigentlichen Entleervorganges.

Die gattungsbildende Druckschrift GB-A-806 364 offenbart ein Verfahren zur Beschleunigung des Entleerens von Betriebsmittel aus dem Arbeitsraum eines hydrodynamischen Retarders, welcher zwischen einem Rotor und einem Stator gebildet wird, wobei während eines Entleervorganges gasförmiges Medium über einen zusätzlichen Kanal in den Arbeitsraum eingebracht wird und eine Volumenverdrängung indiziert wird. Diese Ausführung ist durch einen separaten Kanal charakterisiert, welcher zusätzlich in den Retarder eingearbeitet werden muss, so dass eine Nachrüstung nur durch Bauteilaustausch möglich ist und ferner zusätzliche Maßnahmen ergriffen werden müssen.

Der Erfindung liegt daher die Aufgabe zugrunde, eine Anordnung anzugeben, mit der unabhängig von der Retarderdrehzahl stets eine möglichst rasche Entleerung des Arbeitsraumes des hydrodynamischen Retarders bzw. teilweise Entleerung bei gewünschter Reduzierung des Bremsmomentes erzielt wird. Die erfindungsgemäße Lösung soll sich dabei durch einen geringen konstruktiven steuerungstechnischen Aufwand auszeichnen.

Die erfindungsgemäße Lösung ist durch die Merkmale der Ansprüche 1, 16 und 17 charakterisiert. Vorteilhafte Ausgestaltungen sind in den Unteransprüchen beschrieben.

Erfindungsgemäß wird eine Beschleunigung des Entleerens von Betriebsmittel aus dem zwischen Rotor und Stator gebildeten Arbeitsraum eines hydrodynamischen Retarders durch das Einbringen von gasförmigem Medium vorzugsweise unter Druck, oder bedingt durch die aufgrund der Rotorrotation während des Entleerens bzw. geöffneten Auslassventil sich einstellende Gangwirkung in den Arbeitsraum während des Entleervorganges erzielt. Mit diesem wird auf der Basis der Volumenverdrängung auf das im Arbeitsraum befindliche Betriebsmittel ein Druck ausgeübt, welcher dazu führt, daß der Volumenstrom durch den Betriebsmittelauslass vergrößert wird.

Bei der erfindungsgemäßen Lösung wird somit der Zeitpunkt bis zur Einstellung eines reduzierten Bremsmomentes bzw. der Deaktivierung des hydrodynamischen Retarders erheblich verkürzt. Andere, von diesem Vorgang abhängige Systeme, insbesondere das Antiblockiersystem können somit optimaler arbeiten.

Die Möglichkeit der Ausnutzung der durch die Rotation bedingten Ausgangswirkung führt dabei zu einer Beschleunigung des Entleervorganges. Die Einbringung unter Druck, d. h. quasi ein Einschieben dient neben der Beschleunigung des Entleervorganges auch der Erzielung des richtigen bzw. gewünschten Entleerniveaus.

Die Einbringung des unter Druck stehenden gasförmigen Mediums in den Arbeitsraum erfolgt dabei zeitgleich oder mit geringfügiger Verzögerung zur Einleitung des Entleervorganges. Der Zeitraum während des Entleervorganges erstreckt sich vom Beginn bis zum Erreichen der vollständigen Entleerung oder aber dem Erreichen eines definierten geringeren Füllungsgrades. Der Beginn des Entleervorganges ist dabei beispielsweise durch die Abgabe eines Fahrerwunschsignals oder einer Anforderung eines Fahrzeugführungsrechners zur Verringerung des Bremsmomentes oder aber zur Deaktivierung der Bremseinrichtung charakterisiert. Zu berücksichtigen sind die entsprechenden Bearbeitungszeiten dieser Signale in einer Steuereinrichtung.

Als gasförmiges Medium findet vor allem Luft Verwendung, wobei diese aus anderen Systemen beim Einsatz des Retarders in Antriebssystemen von Fahrzeugen oder stationären Anlagen genutzt wird. Dabei findet zum einen die Abluft aus Steuerungsfunktionen, insbesondere der Ventilsteuerung Verwendung.

Das gasförmige Medium kann im entspannten Zustand vorliegen und erst vor der Einbringung in den Arbeitsraum komprimiert werden, beispielsweise in einem Verdichter. Entsprechend einer besonders vorteilhaften Ausgestaltung liegt das gasförmige Medium als Abfallprodukt von pneumatischen Ansteuerungen von Stelleinrichtungen oder anderer Systeme des Antriebssystems, in welchen der hydrodynamische Retarder integriert ist, bereits im komprimierten Zustand vor. In diesem Fall sind keine zusätzlichen Druckgaserzeuger und Speicher vorzusehen. Die im System vorhanden Bauelemente werden genutzt.

Unter einem weiteren Aspekt der Erfindung ist die Einbringung und der dabei erzeugte Verdrängungseffekt steuerbar. Das gasförmige Medium unter Druck ist dazu hinsichtlich der Menge und/oder der Größe des Druckes variierbar. Die Einbringung von gasförmigen Medium unter Druck in den Arbeitsraum erfolgt vorzugsweise impulsartig, mindestens jedoch in einem Impuls.

Bei der Erfindungsgemäßen Lösung erfolgt die Einbringung von gasförmigen Medium über ohnehin vorhandene Kanäle und Öffnungen zum Arbeitsraum des Retarders, um den konstruktiven Aufwand zu verringern. Die Einbringung kann dabei
a) über den Betriebsmitteleinlass in den Arbeitsraum
b) bei Ausführungen eines Retarders mit mindestens einem Entlüftungskanal in der Beschaufelung von Stator und/oder Rotor, der in den Schaufelgrund und von diesem in einen Raum nach außerhalb des Schaufelrades mündet, über diesen
erfolgen.

Bei Ausführungen von hydrodynamischen Retardem mit einem, dem Betriebsmittelauslaß nachgeordnetem erweiterten Arbeitsraumes vor dem Auslassraum, welchem ein Auslassventil zugeordnet ist, ist das in den Arbeitsraum unter Druck eingebrachte gasförmige Medium hinsichtlich seiner Kennwerte Dichte, Druck und/oder Temperatur und/oder Volumen vorzugsweise derart charakterisiert, dass wenigstens auch eine teilweise, vorzugsweise vollständige Volumenverdrängung des im Auslassraum befindlichen Betriebmittels erzielt wird.

Vorrichtungsmäßig umfasst der hydrodynamische Retarder ein Retardergehäuse, einen Stator und einen Rotor, die miteinander einen Arbeitsraum bilden, sowie mindestens einen Betriebsmitteleinlass in den Arbeitsraum und einen Betriebsmittelauslaß aus dem Arbeitsraum. Erfindungsgemäß sind Mittel zum Aufbringen bzw. zur Einbringung von gasförmigem Medium unter Druck in den Arbeitsraum vorgesehen. Diese umfassen wenigstens eine Verbindungsleitung, welche die Mediumquelle mit einem Einlass für das gasförmige Medium in den Arbeitsraum gekoppelt.

Die Mittel zum Aufbringen bzw. zum Einbringen gasförmigen Mediums unter Druck in den Arbeitsraum umfassen Mittel zur Druckgaserzeugung, eventuell einen Speicher für das komprimierte gasförmige Medium und mindestens eine Verbindungsleitung, über welche die Mittel zur Druckgaserzeugung oder der Speicher mit einem Einlass für gasförmiges Medium mit dem Arbeitsraum verbindbar ist. Die Druckgaszufuhr kann autark erfolgen. In diesem Fall umfassen die Mittel zur Druckgaserzeugung mindestens einen Verdichter und der Speicher für das komprimierte gasförmige Medium ist als Druckmittelreservoir ausgeführt. Dabei werden in der Regel in der Verbindungsleitung Mittel zur Steuerung der Verbindung zwischen Speicher und Arbeitsraum vorgesehen.

Bei Ausnutzung von Abluft anderer Systeme oder des Retarders selbst, werden die Mittel zur Druckgaserzeugung von diesen selbst, insbesondere Stelleinrichtungen dieser, beispielsweise einer pneumatisch angesteuerten Steil- oder Ventileinrichtung gebildet, deren Abfallprodukt in Form komprimierter Abluft das komprimierte gasförmige Medium bildet. In diesem Fall ist kein separater Speicher erforderlich und es bedarf lediglich des Vorsehens einer entsprechenden Verbindungsleitung.

Wird der Einlass für das gasförmige Medium vom Betriebsmitteleinlass gebildet, sind Mittel zur wahlweisen Kopplung der mit dem Betriebsmitteleinlass gekoppelten Leitung mit einer betriebsmittelführenden Leitung oder den Mitteln zur Einbringung gasförmigen Mediums unter Druck in den Arbeitsraum vorzusehen. Diese umfassen im einfachsten Fall eine, der mit dem Betriebsmitteleinlass gekoppelten Leitung zugeordnete Ventileinrichtung mit mindestens zwei Schaltstellungen - einer ersten Schaltstellung und einer zweiten Schaltstellung, wobei in der zweiten Schaltstellung der Betriebsmittelzulauf zum Betriebsmitteleinlass unterbrochen ist. Die Verbindungsleitung ist dann mit der mit dem Betriebsmitteleinlass gekoppelten Leitung zwischen der dieser zugeordneten Ventileinrichtung und dem Betriebsmitteleinlass gekoppelt.

Eine andere Möglichkeit besteht darin, die Verbindungseinleitung an die Einlassleitung zu koppeln und die Betriebsmittelzufuhr über die Einlassleitung vor der Knotenstelle Verbindungsleitung und Einlassleitung in Betriebsmittelzufuhrrichtung abzusperren.

Erfolgt die Beaufschlagung mit Druckmittel über die Entlüftungskanäle werden den Entlüftungskanälen Mittel zur Steuerung der Funktion als Entlüftungskanal oder Einlass für das gasförmige Medium zugeordnet. Diese Funktion wird im einfachsten Fall über eine mit einem Entlüftungskanal gekoppelte Leitung eines Entlüftungssystems und Mitteln zur wahlweisen Kopplung der mit dem Entlüftungskanal gekoppelten Leitung oder den Mitteln zur Einbringung gasförmigen Mediums unter Druck mit dem Arbeitsraum realisiert, wobei der mit dem Entlüftungskanal gekoppelten Leitung eine Ventileinrichtung mit mindestens zwei Schaltstellungen - einer ersten Schaltstellung und einer zweiten Schaltstellung- zugeordnet ist, und in der zweiten Schaltstellung der Entlüftungskanal abgesperrt wird. Die Verbindungsleitung ist dann mit der mit dem Entlüftungskanal gekoppelten Leitung zwischen der dieser zugeordneten Ventileinrichtung und den Entlüftungsöffnungen am Beginn des Entlüftungskanales gekoppelt.

Die erfindungsgemäße Lösung kann des weiteren auch der wenigstens teilweisen Entleerung bei Ausführung eines hydrodynamischen Retarders mit Mitteln zum Einstellen eines optimalen Füllungsgrades in Bezug auf die Verlustleistungsminimierung im Nicht-Bremsbetrieb des Arbeitsraumes und eventuell des diesem Arbeitsraum nachgeordneten erweiterten Arbeitsraumes in den Auslassraum und zur nahezu vollständigen Entleerung des Arbeitsraumes verwendet werden. Die Mittel zum Einstellen des optimalen Füllgrades umfassen dazu einen Auslaß, der an einem geodätisch erhöhten Ort bei Ausführungen mit erweitertem Arbeitsraum und/oder bei Ausführungen ohne erweiterten Arbeitsraum radial innenliegend und damit der Fliehkraft entgegenstehend im Arbeitsraum angeordnet ist, so daß bei sich entleerender Bremse ab einem vorbestimmten optimalen Füllungsgrad keine Arbeitsflüssigkeit mehr aus dem Arbeitsraum abfließen kann. Dabei kann der Auslasskanal zur Einstellung des optimalen Füllgrades waagrecht in einer Höhe h angeordnet sein, so dass der Retarder nicht vollständig entleert wird, sondern stets auch im Nicht-Bremsbetrieb eine gewisse Menge Retarderarbeitsflüssigkeit im Retarder verbleibt. In einer alternativen Ausführungsform zu einer waagrechten Anordnung des Auslaßkanals in einer Höhe h kann vorgesehen sein, daß der Auslaßkanal ein senkrecht in den Arbeitsraum oder in den erweiterten Arbeitsraum mit der Höhe h hineinreichendes Rohr ist. Die erfindungsgemäße Lösung wird hier dazu genutzt, um den Raum zwischen dem Auslaß aus dem Arbeitsraum bzw. bei Ausführung mit erweitertem Arbeitsraum zwischen dem Auslaß aus diesem und dem Auslaßventil gezielt zu entleeren und ein Füllen des Retarderarbeitsraumes im Nicht-Bremsbetrieb bei niedrigen Drehzahlen zu verhindern sowie bei hohen Drehzahlen eine sehr geringe Verlustleitung zu erzielen.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung eine erste Ausführungsform einer erfindungsgemäß gestalteten Lösung;
- Figur 2: verdeutlicht in schematisch vereinfachter Darstellung eine zweite Ausführungsform einer erfindungsgemäß gestalteten Lösung;
- Figur 3: verdeutlicht in schematisch vereinfachter Darstellung eine dritte Ausführungsform einer erfindungsgemäß gestalteten Lösung;
- Figur 4a bis 4c: verdeutlichen mögliche Ausführungen der Mittel zum Einbringen gasförmigen Mediums in den Arbeitsraum unter Druck;
- Figur 5: verdeutlicht eine mögliche Anwendung der erfindungsgemäßen Lösung bei Ausführung eines Retardes mit Auslaßraum;
- Figuren 6a und 6b: verdeutlichen mögliche Ausführungen einer Impulsventileinrichtung;
- Figur 7: verdeutlicht eine Ausführung der erfindungsgemäßen Lösung mit Ausnutzung der Abluft als gasförmiges Medium aus einer Ventilsteuerung;
- Figur 8: verdeutlicht eine Ausführung gemäß Figur 7 mit Einbringung des gasförmigen Mediums in den Zufuhrkanal.

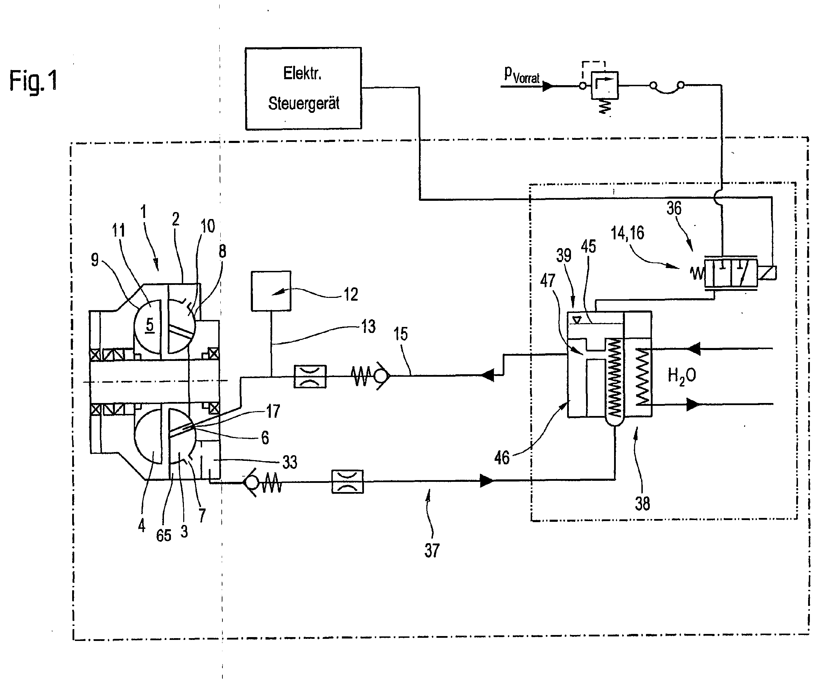

In Figur 1 ist anhand einer Schnittdarstellung in schematisch stark vereinfachter Darstellung eine erste Ausführungsform der erfindungsgemäßen Lösung dargestellt. Der hydrodynamische Retarder 1 umfaßt ein Retardergehäuse 2, einen Stator 3 und einen Rotor 4. Der Stator 3 und der Rotor 4 bilden einen Arbeitsraum 5, welcher torusförmig ausgebildet ist. In diesem wird Betriebsmittel während des Betriebes des hydrodynamischen Retarders 1 zum Zwecke der Erzeugung eines Bremsmomentes umgewälzt. Der Stator 3 ist zu diesem Zwecke gehäuse - bzw. ortsfest gelagert. Der Rotor 4 ist drehbar gelagert und ist mit einem rotierenden An- bzw. Abtriebselement drehbar gekoppelt. Zur Realisierung eines Bremsmomentes ist es erforderlich, ein Betriebsmittel, in der Regel Öl, in den Arbeitsraum 5 einzubringen. Dies erfolgt über mindestens einen Betriebsmitteleinlaß 6 zum Arbeitsraum 5. Eine Reduzierung des Bremsmomentes erfolgt über die teilweise Entleerung des torusförmigen Arbeitsraumes, der Übergang zum Nichtbremsbetrieb durch die Entleerung des torusförmigen Arbeitsraumes 5. Zu diesem Zweck weist der hydrodynamische Retarder 1 wenigstens einen Betriebsmittelauslaß 7 aus dem torusförmigen Arbeitsraum 5 auf. Der Betriebsmitteleinlaß ist in der Regel am Rotor 4 angeordnet, während der Betriebsmittelauslaß 7 am Stator 3 angeordnet ist. Im dargestellten Fall ist der Einlaß 6 am Stator 3 angeordnet. Dabei ist es unerheblich, ob der Betriebsmitteleinlaß 6 bzw. der Betriebsmittelauslaß 7 im Schaufelgrund 8 bzw. 9 der Beschaufelung 10 bzw. 11 von Stator 3 bzw. Rotor 4 in den von der Beschaufelung 10 und 11 freien Bereichen oder aber in mindestens einer Schaufel der Beschaufelung 10 bzw. 11 angeordnet sind. Die konkrete Ausgestaltung von Betriebsmitteleinlaß 6 bzw. Betriebsmittelauslaß 7 liegt dabei im Ermessen des zuständigen Fachmannes. Im dargestellten Fall wird für eine Bremsung Steuerluft über eine Ventileinrichtung 36 auf die Oberfläche des Arbeitsmediums 45 geführt, welche Arbeitsmedium über einen Steigkanal 46 und die Einlaßleitung 15 in den Arbeitsraum 5 des Retarders drückt. Dieses Arbeitsmedium wird durch die Pumpwirkung des Rotors wieder über den Betriebsmittelauslaß 7, den erweiterten Arbeitsraum 65 und die Rücklaufleitung 37 und den Wärmetauscher 38 zu einer Knotenstelle 47 geführt, wodurch sich der Brems-Kühl-Kreislauf schließt und durch den an der Knotenstelle 47 anstehenden Druck und der Pumpwirkung des Rotors aufrechterhalten wird. Der Betriebsmittelumsatz und das Bremsmoment des Retarders sind im wesentlichen von dem Druck der Steuerluft abhängig.

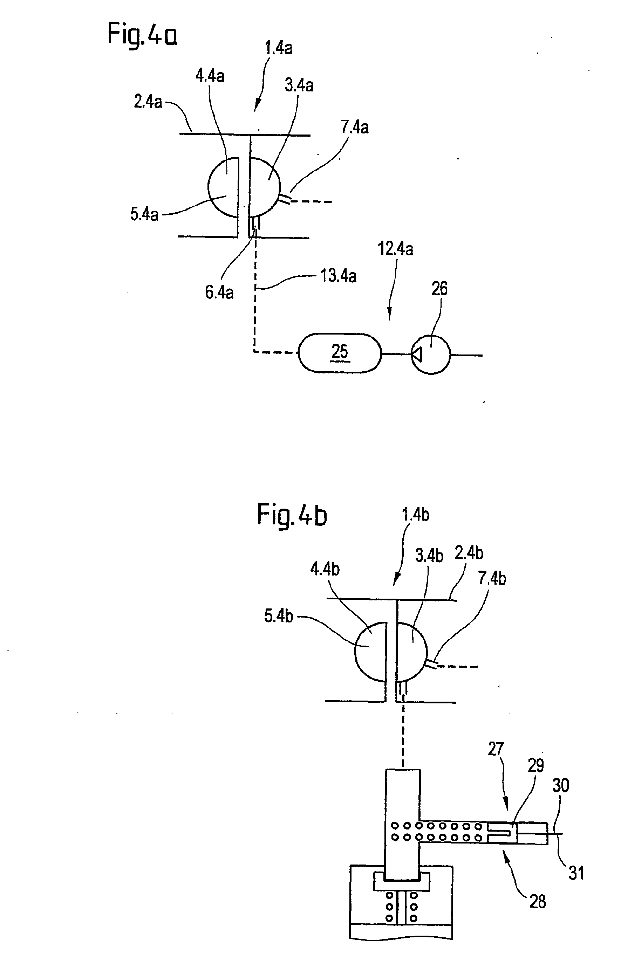

Zur Deaktivierung des hydrodynamischen Retarders 1, d.h. gewünschter Beendigung eines Bremsvorganges, wird zum Ausschalten des hydrodynamischen Retarders 1 der Zustrom an Betriebsmittel zum Arbeitsraum 5 über den Betriebsmitteleinlaß 6 unterbrochen, indem der Steuerdruck auf die Oberfläche des Betriebsmediums 45 weggenommen wird. Das über die Rücklaufleitung 37 und den Wärmetauscher 38 an der Knotenstelle 47 ankommende Betriebsmedium fließt, mangels eines weiterhin über den Steigkanal 46 an der Knotenstelle 47 anstehenden Druckes, im wesentlichen nicht mehr über die Einlaßleitung 15 in den Retarder, sondern über den Steigkanal in den Betriebsmittelspeicher 39. Der im Arbeitsraum 5 befindliche Arbeitskreislauf leert sich aufgrund der Pumpwirkung durch die Rotorrotation automatisch über die Rücklaufleitung 37 in einen Betriebsmittelspeicher 39. Dies gilt auch in Analogie bei gewünschter Reduzierung des durch den hydrodynamischen Retarder 1 aufgebrachten Bremsmomentes. Von großer Bedeutung ist jedoch die Zeitdauer bis zur Einstellung des reduzierten Bremsmomentes bzw. der vollständigen Deaktivierung des hydrodynamischen Retarders 1, wobei zur Gewährleistung einer optimalen Betriebsweise anderer Systeme, zum Beispiels eines Antiblockiersystems, diese Zeitdauer möglichst kurz zu halten ist. Zur Beschleunigung des Entleervorganges bei Reduzierung des Bremsmomentes oder bei Deaktivierung des hydrodynamischen Retarders 1 wird dazu erfindungsgemäß ein gasförmiges Medium in den Arbeitsraum 5 eingedrückt, d.h. das gasförmige Medium wird unter Druck in den Arbeitsraum 5 eingebracht. Damit wird eine Volumenverdrängung im Arbeitsraum ermöglicht, welche einen beschleunigten Übergang des Betriebsmittels aus dem Arbeitsraum 5 in den Betriebsmittelauslaß 7 erzeugt. Zu diesem Zweck sind Mittel 12 zum Aufbringen bzw. Einbringen eines gasförmigen Mediums vorzugsweise unter Druck in den Arbeitsraum 5 vorgesehen, diese sind mit 12 bezeichnet und umfassen wenigstens eine Verbindungsleitung 13, welche die Kopplung zwischen einer Quelle für das gasförmige Medium mit dem Arbeitsraum 5, insbesondere dem Einlaß 17 für gasförmiges Medium ermöglicht. Die Mittel 12 zum Aufbringen bzw. Einbringen eines gasförmigen Mediums unter Druck in den Arbeitsraum 5 können vielgestaltig ausgeführt sein. Dies ist wesentlich davon abhängig, aus welcher Quelle das gasförmige Medium stammt. Auf diese Möglichkeiten wird in den Figuren 4a und 4b noch weiter eingegangen. Als gasförmiges Medium wird vorzugsweise Luft verwendet.

Gemäß einer ersten Ausführungsform, wie in der Figur 1 dargestellt, sind die Mittel 12 zur Einbringung des gasförmigen Mediums unter Druck in den Arbeitsraum 5, insbesondere eine Quelle für das gasförmige Medium über die Verbindungsleitung 13 mit dem Betriebsmitteleinlaß 6 verbunden, welcher somit als Einlaß 17 für das gasförmige Medium fungiert. Dazu sind Mittel 14 zur wahlweisen Kopplung des Betriebsmitteleinflusses 6 mit einer Betriebsmittel führenden Einlaßleitung 15 und der Mittel zur Einbringung eines gasförmigen Mediums unter Druck 12 in den Arbeitsraum 5 vorgesehen. Diese Mittel zur wahlweisen Kopplung 14 umfassen im einfachsten Fall eine Ventileinrichtung 16 in Form eines Wegeventils, wobei im dargestellten Fall dies Funktion von der Ventileinrichtung 36 in Auslaßstellung übernommen wird. Dabei kann die Verbindungsleitung 13 entweder direkt mit dem Betriebsmitteleinlaß 6 gekoppelt werden oder aber an einem Teilabschnitt der Betriebsmittel führenden Einlaßleitung. Dies bedeutet, daß auch Abschnitte der Betriebsmittel führenden Einlaßleitung bzw. Einlaßräume für die Führung des gasförmigen Mediums mitbenutzt werden können. In diesem Fall ist es jedoch erforderlich, daß diese Bereiche zur Führung des gasförmigen Mediums druckdicht ausgeführt sind.

Bei der in der Figur 1 dargestellten Ausführung kommt es lediglich darauf an, daß hier die Einbringung des gasförmigen Mediums unter Druck in den Arbeitsraum 5, vorzugsweise in Form von Luft, über den üblicherweise bei Betätigung des hydrodynamischen Retarders 1 zur Erzeugung eines Bremsmomentes zur Füllung des Retarders 1 erforderlichen Betriebsmitteleinlaß 6 erfolgt. Es besteht somit hier die Möglichkeit, bereits vorhandene Führungskanäle, welche in diesem Betriebszustand nicht genutzt werden, zu nutzen. Dabei ist es unerheblich, in welcher Form der Einlaß oder die Betriebsmitteleinlaßöffnungen selbst zum torusförmigen Arbeitsraum 5 ausgeführt sind, insbesondere ob diese im Schaufelgrund 8 und 9, wie in der Figur 1 schematisch dargestellt, oder aber in der Beschaufelung 11 des Rotors 4 angeordnet sind.

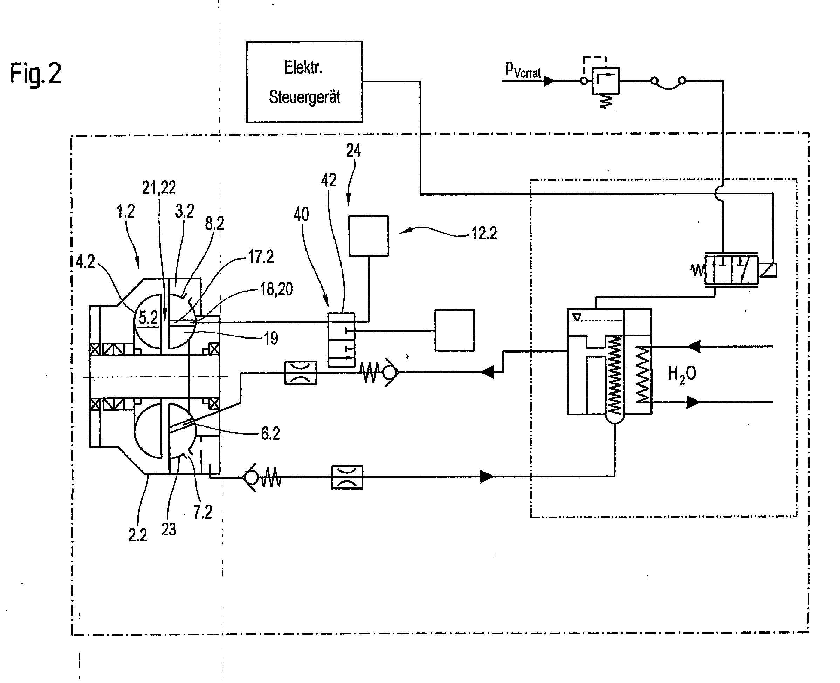

Demgegenüber offenbart die Figur 2 eine weitere Ausführungsform zur Umsetzung der erfindungsgemäßen Lösung, welche zusätzlich oder alternativ zu der in Figur 1 dargestellten, zum Einsatz gelangen kann. Der Grundaufbau des hydrodynamischen Retarders 1 entspricht dem in der Figur 1 beschriebenen. Für gleiche Elemente werden daher die gleichen Bezugszeichen verwendet. Der hydrodynamische Retarder 1.2 umfaßt hier ebenfalls einen Stator 3.2 und einen Rotor 4.2, die miteinander einen Arbeitsraum 5.2 bilden. Dem Arbeitsraum 5.2 sind mindestens ein Betriebsmitteleinlaß 6.2 und ein Betriebsmittelauslaß 7.2 zugeordnet. Die Mittel 12.2 zur Einbringung eines gasförmigen Mediums unter Druck in den Arbeitsraum 5.2 sind auch hier über einen Einlaß 17.2 für das gasförmige Medium in den Arbeitsraum 5.2 gekoppelt. Im Gegensatz zu der in der Figur 1 dargestellten Ausführungsform wird hier der Einlaß 17.2 für das gasförmige Medium von Öffnungen bzw. Kanälen 18, welche den Arbeitsraum 5.2 mit einem Raum außerhalb, beispielsweise einem Raum im Retardergehäuse 2 zum Zwecke der Entlüftung des Arbeitsraumes 5.2 verbinden, gebildet. Im dargestellten Fall weist dazu die Beschaufelung 10.2 des Stators 3.2 mindestens eine Entlüftungsschaufel 19 auf, die einen Entlüftungskanal 20 trägt, welcher den Kernraum 21, d.h. den Innenraum 22, des Arbeitsraumes 5.2 mit einem Raum im Retardergehäuse 2.2 verbindet. Dabei erstreckt sich der Entlüftungskanal 20 bzw. die Entlüftungskanäle 20.1 bis 20.n jeweils vom Schaufelende einer Entlüftungsschaufel 19 bis zum Schaufelgrund 8.2 und durch die Wand 23 des Stators 3.2 hindurch. Die Mittel zur Einbringung von gasförmigem Medium unter Druck 12 in den Arbeitsraum 5 können dabei im Retardergehäuse 2 integriert sein. Vorzugsweise, bei Ausnutzung beim Einsatz im Fahrzeug ohnehin vorhandener Druckmittelquellen, sind diese außerhalb des Retardergehäuses 2 angeordnet, jedoch mit dem hydrodynamischen Retarder 1 druckdicht verbunden. Auch hier werden ohnehin vorhandene Elemente und Kanäle des hydrodynamischen Retarders 1 benutzt, welche im Betriebszustand der zur Realisierung eines reduzierten Bremsmomentes bedingten teilweisen Entleerung des Arbeitsraumes 5.2 bzw. zur Entleerung des Arbeitsraumes 5.2 nicht anderweitig genutzt werden, da diese Kanäle und Räume, hier die zur Profilentlüftung während des Füllvorganges vorhandenen Kanäle, jeweils in anderen Betriebszuständen genutzt werden und somit keine Kollision bezüglich der unterschiedlichen Nutzungen in einem Betriebszustand besteht. Um die Kanäle 20 mit den Mitteln 12 zu koppeln, sind Mittel 40 zur wahlweisen Kopplung des Entlüftungskanales 20 oder der Kanäle mit einem Entlastungsraum 41, beispielsweise einem Raum im Retardergehäuse 2.2 oder außerhalb dessen vorgesehe. Diese sind im einfachsten Fall als Ventileinrichtung 42 ausgeführt.

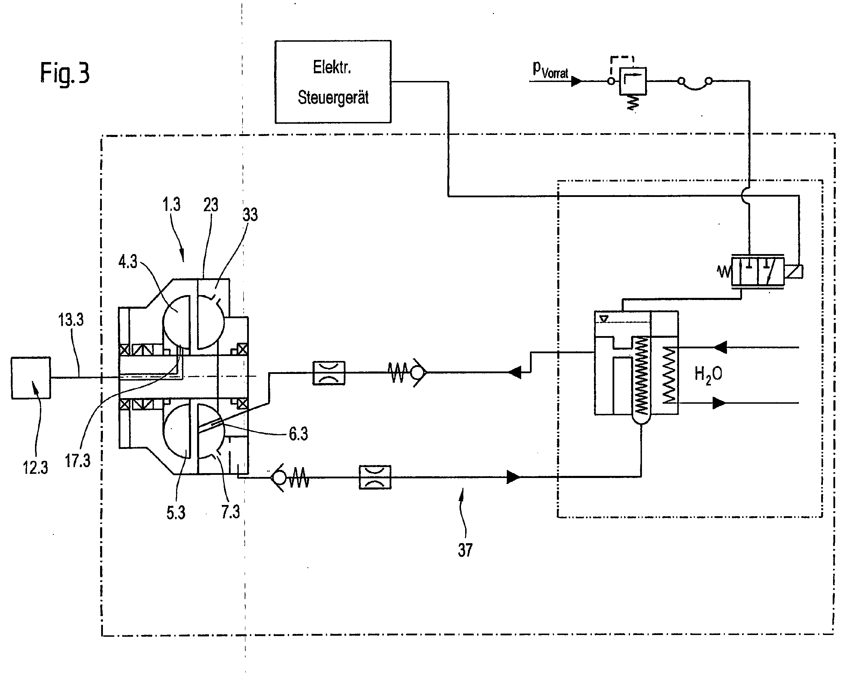

Die beiden in den Figuren 1 und 2 dargestellten Lösungen stellen daher besonders vorteilhafte Lösungen dar. Denkbar ist jedoch auch, wie in der Figur 3 dargestellt, die Mittel zur Einbringung von gasförmigem Medium unter Druck 12.3 in den Arbeitsraum 5.3 über einen separaten Einlaß 17.3 für das gasförmige Medium mit dem Arbeitsraum 5.3 zu koppeln. In diesem Fall ist für die Versorgung mit gasförmigem Medium eine separate Leitungsverbindung vorgesehen, welche keine Mittel zur Funktionszuordnung einzelner Leitungsteile, wie in den Figuren 1 und 2 dargestellt, erfordert. Insbesondere auch bei der in der Figur 2 dargestellten Lösung werden lediglich Leitungsverbindungen des Systems der Profilentlüftung genutzt, wobei zur Ankopplung der Mittel zur Einbringung des gasförmigen Mediums unter Druck 12 in den Arbeitsraum 5 an die Öffnungen bzw. Kanäle 18 in den Entlüftungsschaufeln 19 Mittel 24 zur Steuerung der Nutzung der Leitungsverbindung bzw. von Teilen dieser zuzuordnen sind, beispielsweise in Form der Ventileinrichtung 40.

Die Figuren 4a und 4b verdeutlichen in schematisch stark vereinfachter Darstellung zwei mögliche Ausgestaltungen der Mittel 12.4a bzw. 12.4b zum Einbringen gasförmigen Mediums vorzugsweise unter Druck in den Arbeitsraum 5. Die Quellen für das gasförmige Medium sind dabei jeweils über die Verbindungsleitungen 13.4a und 13.4b mit einem Einlaß 17.4a bzw. 17.4b für das gasförmige Medium in den Arbeitsraum 5.4a bzw. 5.4b gekoppelt. Dabei ist der Begriff Verbindungsleitung nicht dahingehend zu verstehen, daß hier nur Leitungen gemeint sind, sondern auch in ortsfesten Elementen geführte Kanäle, Kombinationen aus Leitungsverbindungen und diesen, d.h. lediglich die Kopplung zwischen den Mitteln 12.4 und 12.4b und dem Einlaß 17.4a bzw. 17.4b.

Bei der in der Figur 4a dargestellten Möglichkeit umfassen die Mittel (12.4a) zur Einbringung von gasförmigem Medium vorzugsweise unter Druck in den Arbeitsraum 5.4a eine Quelle in Form eines Speichers in Form eines Luftkessels 25, welcher über die Verbindungsleitung 13.4a mit dem Einlaß 17.4a gekoppelt ist. Zur Bereitstellung von gasförmigem Medium unter Druck ist eine Verdichtereinrichtung 26 vorgesehen. Dabei kann es sich bei dem Luftkessel um den Preßluftbehälter des Fahrzeuges handeln oder aber ein separates Bauelement, welchem Luft unter Druck zugeführt wird. In diesem Fall kann die zugeführte Luft die zur Realisierung der Steuerfunktionen und der Ventilfunktionen erforderliche Abluft sein. Diese kann jedoch auch ohne Zwischenspeicherung direkt dem Arbeitsraum zugeführt werden.

Eine weitere Möglichkeit der Ausgestaltung der Mittel 12.4b ist in der Figur 4b dargestellt. Diese umfaßt Mittel zur Erzeugung von Druckimpulsen 27. Die Mittel zur Erzeugung von Druckimpulsen 27 umfassen einen Druckimpulszylinder 28, welcher einen druckbeaufschlagten Kolben 29 aufweist. Bei geeigneter Lage und geeigneter Ausbildung des Druckimpulszylinders, insbesondere des Verhältnisses der Länge zum Durchmesser, kann auch auf den Kolben verzichtet werden. Dieser hat die Aufgabe, einen Volumenimpuls in den Arbeitsraum 5.4b zu bringen. Beim Anlegen eines Druckimpulses wird dabei Arbeitsmedium, vorliegend Öl, durch den Betriebsmittelauslaß 7.4b entleert. Der zur Betätigung des Impulszylinders 28 notwendige Luftanschluß 30 an eine Quelle für gasförmiges Medium in Form eines Druckreservoirs ist durch die Leitung 31 vorliegend nur angedeutet. Auch hier kann das Druckreservoir von einem ohnehin im Fahrzeug vorhandenem Druckluftkessel bzw. Druckluftbehälter gebildet werden.

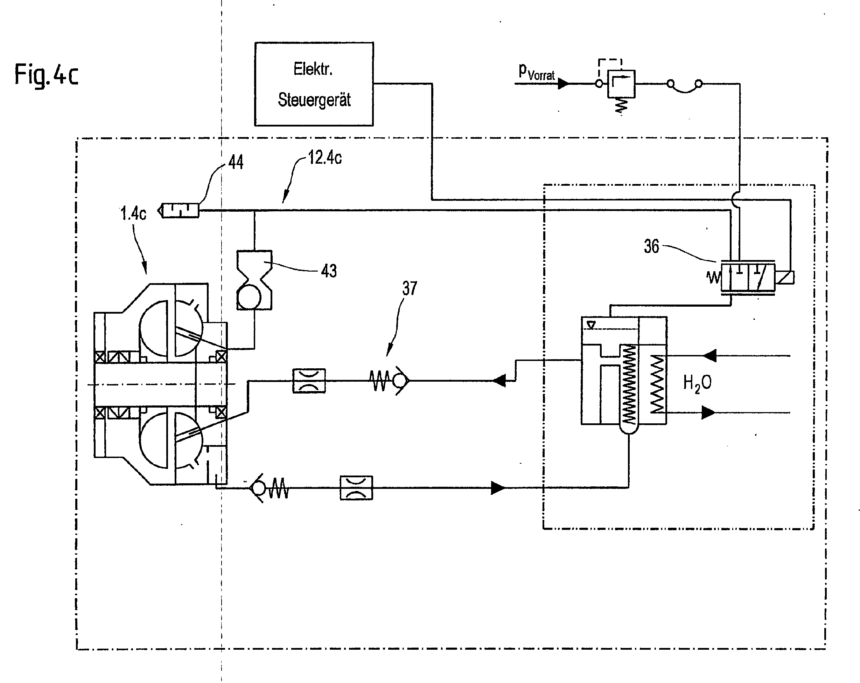

Figur 4c verdeutlicht anhand einer Ausführung gemäß Figur 1 eine Möglichkeit zur Nutzung der Abluft aus einer Ventilansteuerung, insbesondere der kombinierten Ein- und Auslaßventileinrichtung 36. Der bei Figur 1 in den Entlastungsraum 41, insbesondere die Umgebung entlastet abgegebene Luftstrom wird hier in den Raum zwischen einem Schwimmerventil 43 und einen Sinterfilter 44 geblasen. Der im Sinterfilter 44 entstehende Rückstaudruck läßt einen Teil der Abluft über das Schwimmerventil in den Arbeitsraum 5.4c des Retarders 1.4 fließen. Im übrigen entspricht der Aufbau dem in der Figur 1 beschriebenen.

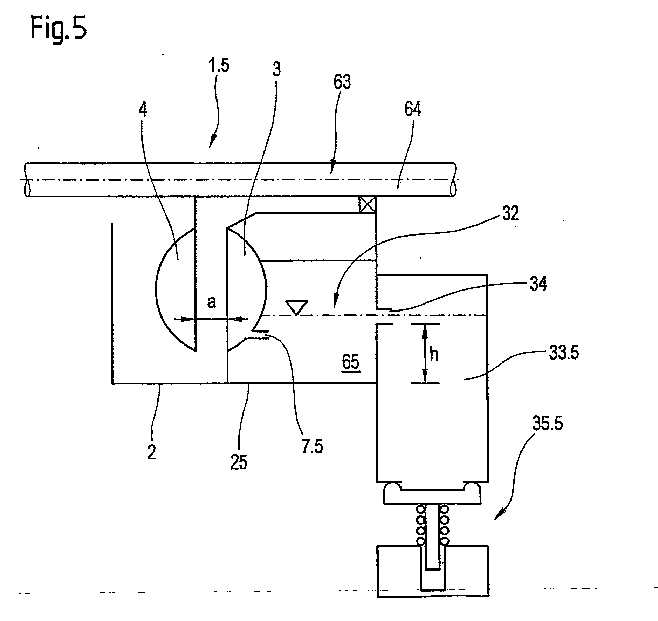

Figur 5 verdeutlicht ein weiteres Anwendungsgebiet in einem hydrodynamischen Retarder 1.5, welcher Mittel 32 zur Einstellung eines optimalen Füllungsgrades 32 umfaßt. Zu erkennen sind ferner die Retarderwelle 64 und die Rotationsachse 63 des Rotors 4. Bei diesem Retarder 1.5 befindet sich in der Rückwand des Stators 3.5 der Betriebsmittelauslaß 7.5, der in den hinter dem Stator 3.5 angeordneten erweiterten Arbeitsraum 65 mündet. Der hinter dem Stator 3.5 angeordnete erweiterte Arbeitsraum 65 umfaßt wiederum einen Auslaß 34, welcher auch als Überlaufkante bezeichnet wird und der vorliegend waagerecht angeordnet ist und in den Auslaßraum 33.5 mündet, welchem ein Auslaßventil 35.5 zugeordnet ist. Der waagerecht angeordnete Auslaß 34 befindet sich in einer Höhe h. Im Gegensatz zu herkömmlichen Retardern, bei denen der Auslaß am Boden angeordnet ist, wird auf diese Art und Weise sichergestellt, daß der hydrodynamische Retarder 1 auch im Nichtbremsbetrieb nie vollständig entleert werden kann und immer eine gewisse Restölmenge im Retarderarbeitsraum 5.5, d.h. im Raum zwischen Rotor 4.5 und Stator 3.5, umläuft. Durch die entsprechende Wahl der Höhe h kann die Menge an Betriebsmittel, welches im Nichtbremsbetrieb im Arbeitsraum 5.4 zusammen mit dem gasförmigen Medium verbleibt, genau eingestellt werden. Auf diese Art und Weise ist es möglich, im Nichtbremsbetrieb eine vorbestimmte Füllung und damit Störung der sich ansonsten einstellenden Luftströmung, welche zu Verlustleistungen führt, einzustellen, die so geändert werden kann, daß sich bei einer vorbestimmten Drehzahl ein minimaler λ-Wert und damit ein Optimum in bezug auf die Leerlaufverluste ergibt. Erfindungsgemäß ist vorgesehen, daß dieser Raum, d.h. der Auslaßraum 33.5 ebenfalls wenigstens teilweise leergedrückt wird, um hier die Verlustleistung, welche bei sehr hohen Drehzahlen durch die geringe Restölmenge bedingt ist, weiter zu minimieren.

Eine schon optimale im Arbeitsraum verbleibende Betriebsmittelmenge für die Betriebsbereiche geringer Drehzahl kann für höhere Drehzahlen noch zu groß sein. Dabei wird die überschüssige Betriebsmittelmenge bei Ansteigen der Drehzahl selbständig, daß heißt auf Grund der Größeren Pumpwirkung des Rotors, in den Bereich zum Auslaß befördert.

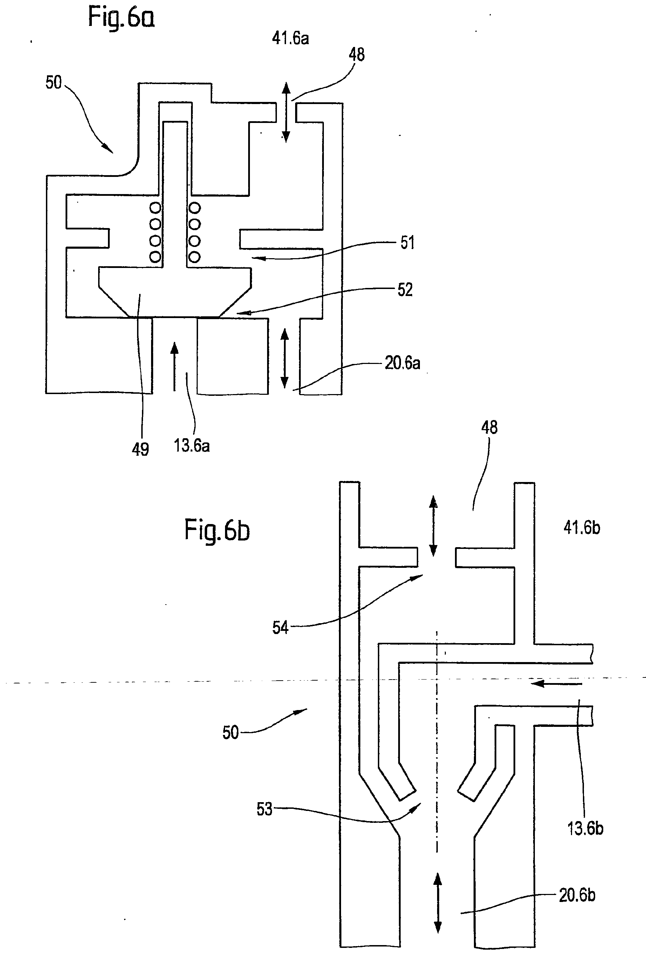

Die Figur 6a verdeutlicht beispielhaft eine mögliche Ausführung eines Impulsventiles 50, wie es beispielsweise als Ventileinrichtung 42 zur wahlweisen Koppelung der Entlüftungskanäle 20.6a mit einem Entlastungsraum 41.6a oder den Mitteln 12.6a verwendet werden kann. Dieses umfaßt einen bewegbaren Kolben 49, dessen Kolbenflächen wahlweise einen Durchtrittsquerschnitt zwischen dem Entlüftungskanal 20.6a bzw. den Kanälen und einer Entlüftung 48 zur Umgebung oder der Verbindungsleitung 13.6a bzw. den mit dieser gekoppelten Mitteln 12.6a und dem Entlüftungskanal 20.6a bzw. den Kanälen freigibt. Die Verbindung zwischen dem Entlüftungskanal 20.6a und der Entlüftung zur Umgebung 48, d.h. dem Entlastungsraum 41.6a ist dabei im Ruhefall über einen Entlüftungsspalt 51 gegeben. Während eines Druckimpulses aus der Verbindungsleitung 13.6a öffnet sich dabei ein Einblasspalt 52 und der Entlüftungsspalt 51 schließt sich oder verringert zumindest seinen Durchtrittsquerschnitt entscheidend, so daß der Druckimpuls über den Entlüftungskanal 20.6a in den hier nicht dargestellten Arbeitsraum gelangt und das Arbeitsmedium bzw. Betriebsmittel dort verdrängt.

Die Figur 6b verdeutlicht demgegenüber ein weiteres Ausführungsbeispiel eines Impulsventiles 50, welches ohne bewegte Teile arbeitet. Die Verbindungsleitung 13.6b erstreckt sich zu diesem Zweck in einem Winkel in den Verbindungskanal zwischen Entlüftungskanal 20.6b und Entlüftung 48 in die Umgebung, wobei die zum Entlüftungskanal 20.6b ausgerichtete Öffnung düsenartig ausgeführt ist und lediglich nur ein geringer Durchtrittsquerschnitt zwischen düsenartigem Endbereich und den Wandbereichen der Verbindung zwischen Entlüftungskanal 20.6b und Entlüftung 48 verbleibt. Der düsenartige Endbereich bildet eine Einblasdüse 53. Die Verbindung zwischen dem Entlüftungskanal 20.6b und der Entlüftung 48 zur Umgebung ist im Ruhefall über den Entlüftungsspalt 51 gegeben. Während eines Druckimpulses aus der Verbindungsleitung 13.6b sperrt die schnelle Strömung aus der Einblasdüse 53 die Verbindung zwischen Entlüftungskanal 20.6b zur Entlüftung 48 zur Umgebung, so dynamisch dass der Druckimpuls über den Entlüftungskanal 20.6b in den Arbeitsraum gelangt und dort eine Verdrängung von Betriebsmittel ermöglicht. Eine mögliche Drossel 54 im Kanal zur Umgebung unterstützt diese Wirkungsweise zusätzlich und kann die Erfordernisse an die Effizienz der Einblasdüse 53 reduzieren oder sogar aufheben, so dass der Bauaufwand des Impulsventiles 50 reduziert werden kann.

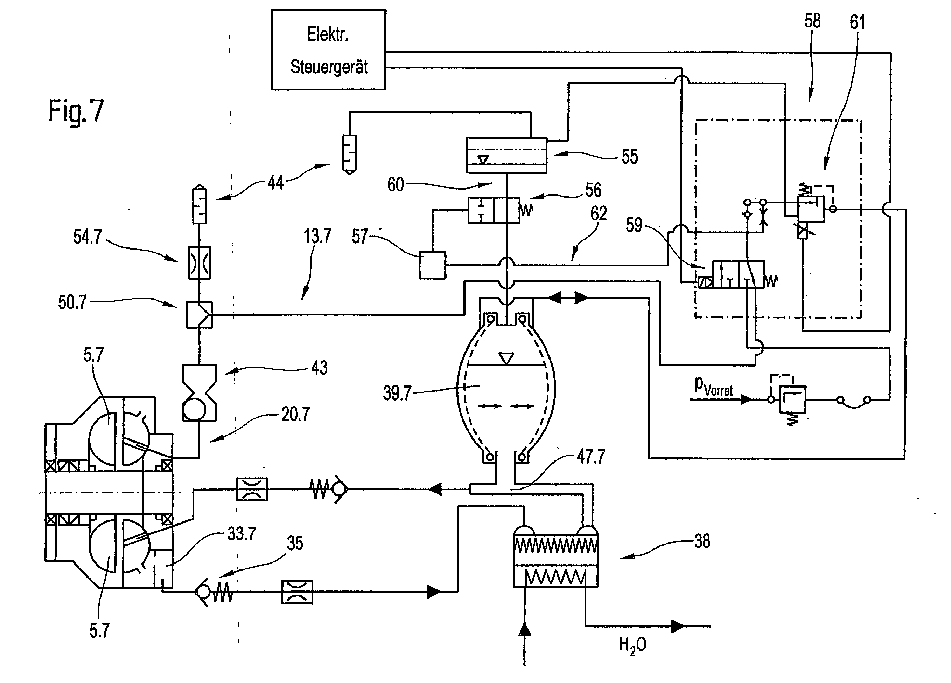

Figur 7 verdeutlicht beispielhaft das Steuerschema eines Retarders, in welchem die Abluft aus einer Ventilsteuerung zum Leerdrücken des Arbeitsraumes 5.5 herangezogen wird. Zur Ansteuerung des Retarders 1.7 ist eine Ventilsteuereinheit 58 vorgesehen, welche ein Vorsteuerventil 59 und ein Proportionalventil 61 umfasst. Dem Retarder 1.7 ist ein Betriebsmittelspeicher 39.7 zugeordnet. Der Arbeitsraum 5.7 ist über eine Einlassleitung und eine Auslassleitung mit diesem gekoppelt. Die Füllung des Retarders wird mittels eines über ein Proportionalventil gesteuerten variablen Druckes auf den Betriebsmittelspiegel im Betriebsmittelspeicher 39.7 beeinflußt. Der Betriebsmittelspeicher 39.7 ist über einen Verbindungskanal, dessen Durchtrittsquerschnitt mittels eines pneumatisch ansteuerbaren Absperrvenil 56 veränderbar ist, mit einem Ausgleichsraum 55 verbindbar. Das Vorsteuerventil 59 schließt über die Ansteuerleitung 62 das pneumatisch angesteuerte Absperrventil 56, welches den Verbindungskanal 60 zwischen Betriebsmittelspeicher 39.7 und Ausgleichsraum 55 steuert und gibt Druckluft zum Proportionalventil hin frei, welches mittels eines variablen Druckes auf den Betriebsmittelspeicher 39.7 den Retarder 1.7 betätigt. Zur Beendigung des Bremsvorganges schaltet das Vorsteuerventil 59 in seine Ausgangslage zurück und über das Proportionalventil 61 wird der Ansteuerdruck im Betriebsmittelspeicher 39.7 abgebaut. Gleichzeitig entlüftet die Ansteuerleitung 62, einschließlich dem Puffervolumen 57 in der Verbindungsleitung 13.7 und drückt über das Impulsventil 50.7 den Arbeitsraum 5.7 und den Auslassraum 33.7 leer.

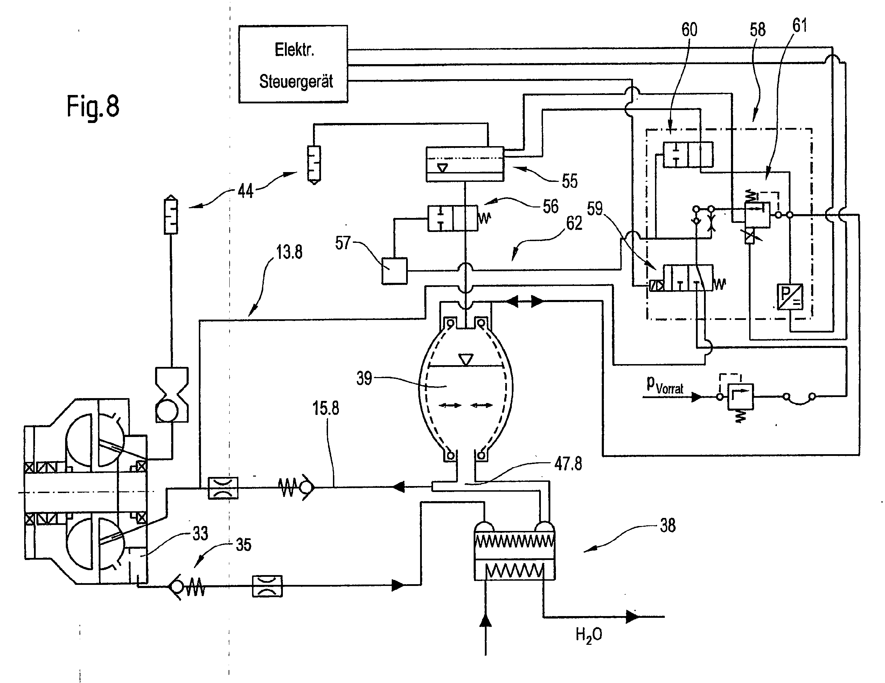

Figur 8 verdeutlicht eine weitere Ausführung mit Ausnutzung der Abluft aus einer Ventilsteuerung. Die Retardersteuerung entspricht der in Figur 7 beschriebenen, lediglich wird in Figur 8 die Abluft nicht in den Kanal 20 zur Entlüftung des Arbeitsraumes 5.8 eingebracht, sondern in den Zulaufkanal 15.8.

### Bezugszeichenliste

- 1, 1.2, 1.3, 1.4a, 1.4b, 1.5: hydrodynamischen Retarder
- 2, 2.2, 2.3, 2.4a, 2.4b, 2.5: Retardergehäuse
- 3, 3.2, 3.3, 3.4a, 3.4b, 3.5: Stator
- 4, 4.2, 4.3, 4.4a, 4.4b, 4.5: Rotor
- 5, 5.2, 5.3, 5.4a, 5.4b, 5.5: Arbeitsraum
- 6, 6.2, 6.3, 6.4a, 6.4b, 6.5: Betriebsmitteleinlass
- 7, 7.2, 7.3, 7.4a, 7.4b, 7.5: Betriebsmittelauslass
- 8: Schaufelgrund
- 9: Schaufelgrund
- 10: Beschaufelung des Stators
- 11: Beschaufelung des Rotors
- 12, 12.2, 12.3, 12.4a, 12.4b, 12.5: Mittel zum Einbringen gasförmigen Mediums unter Druck in den Arbeitsraum
- 13, 13.2, 13.3, 13.4a, 13.4b, 13.5, 13.6a, 13.6b: Verbindungsleitung
- 14: Mittel zur wahlweisen Kopplung des Betriebsmitteleinlass 6 mit den Mitteln 12 oder einer Betriebsmittelquelle
- 15: Einlassleitung
- 16: Ventileinrichtung
- 17,17.2, 17.3, 17.4a, 17.4b, 17.5: Einlass für das gasförmige Medium
- 18: Öffnung bzw. Kanal
- 19: Entlüftungsschaufel
- 20, 20.6a, 20.6b: Entlüftungskanal
- 21: Kernraum
- 22: Innenraum
- 23: Wand
- 24: Mittel zur Steuerung der Nutzung der Leitungsverbindung bzw. von Teilen dieser
- 25: Speicher
- 26: Verdichtereinrichtung
- 27: Mittel zur Erzeugung von Druckimpulsen
- 28: Druckimpulszylinder
- 29: druckbeaufschlagter Kolben
- 30: Luftanschluss
- 31: Leitung
- 32: Mittel zur Einstellung eines optimalen Füllungsgrades
- 33: Auslassraum
- 34: Auslass
- 35: Auslassventil
- 36: Ventileinrichtung
- 37: Auslaßleitung
- 38: Wärmetauscher
- 39: Betriebsmittelspeicher
- 40, 40.6a: Mittel zur Kopplung der Entlüftungskanäle mit dem Entlastungsraum
- 41, 41.6a, 41.6b: Entlastungsraum
- 42: Ventileinrichtung
- 43: Schwimmerventil
- 44: Sinterfilter
- 45: Oberfläche des Arbeitsmediums
- 46: Steigkanal
- 47: Knotenstelle
- 48: Entlüftung zur Umgebung
- 49: Kolben des Impulsventiles
- 50: Impulsventil
- 51: Entlüftungsspalt
- 52: Einblasspalt
- 53: Einblasdüse
- 54: Drossel
- 55: Ausgleichsraum
- 56: pneumatisch angesteuertes Absperrventil
- 57: Puffervolumen
- 58: Ventilsteuereinheit
- 59: Vorsteuerventil
- 60: Verbindungskanal
- 61: Proportionalventil
- 62: Ansteuerleitung
- 63: Rotationsachse des Retarders
- 64: Retarderwelle
- 65: erweiterter Arbeitsraum

## Patentansprüche

1. Verfahren zur Beschleunigung des Entleerens von Betriebsmittel aus dem Arbeitsraum (5; 5.2; 5.3; 5.4a; 5.4b; 5.5) eines hydrodynamischen Retarders (1; 1.2; 1.3; 1.4a; 1.4b; 1.5), welcher zwischen einem Rotor (4; 4.2; 4.3; 4.4a; 4.4b; 4.5) und einem Stator (3; 3.2; 3.3; 3.4a; 3.4b; 3.5) gebildet wird, wobei während eines Entleervorganges gasförmiges Medium in den Arbeitsraum (5; 5.2; 5.3; 5.4a; 5.4b; 5.5) eingebracht wird und eine Volumenverdrängung induziert, **dadurch gekennzeichnet, dass** das gasförmige Medium über den Betriebsmitteleinlass (6; 6.2; 6.3; 6.4a; 6.4b; 6.5) in den Arbeitsraum (5; 5.2; 5.3; 5.4a; 5.4b; 5.5) eingebracht wird, oder bei welchem die Beschaufelung (10, 11) von Stator und/oder Rotor (3; 3.2; 3.3; 3.4a; 3.4b; 3.5; 4; 4.2; 4.3; 4.4a; 4.4b; 4.5) mindestens einen Entlüftungskanal (20) aufweist, der in den Schaufelgrund (8, 9) und von diesem in einen Raum nach außerhalb des Schaufelrades mündet, wobei das gasförmige Medium über den Entlüftungskanal (20) in den Arbeitsraum (5; 5.4a; 5.4b; 5.5) eingebracht wird.

2. Verfahren nach Anspruch 1, **dadurch gekennzeichnet, dass** das gasförmige Medium unter Druck in den Arbeitsraum (5; 5.2; 5.3; 5.4a; 5.4b; 5.5) eingebracht wird.

3. Verfahren nach Anspruch 2, **dadurch gekennzeichnet, dass** mittels Änderung der Größe des Druckes die im Arbeitsraum (5; 5.2; 5.3; 5.4a; 5.4b; 5.5) verbleibende Betriebsmittelrestmenge gezielt eingestellt wird.

4. Verfahren nach einem der Ansprüche 1 bis 3, **dadurch gekennzeichnet, dass** das gasförmige Medium aufgrund der Rotorschaufelradrotation angesogen wird.

5. Verfahren nach einem der Ansprüche 1 bis 4, **dadurch gekennzeichnet, dass** die Einbringung des Mediums in den Arbeitsraum (5; 5.2; 5.3; 5.4a; 5.4b; 5.5) zeitgleich oder mit geringfügiger Verzögerung mit der Einleitung des Entleervorganges erfolgt.

6. Verfahren nach Anspruch 5, **dadurch gekennzeichnet, dass** der Beginn des Entleervorganges durch die Abgabe eines Fahrerwunschsignales oder eine Anforderung des Fahrzeugführungsrechners zur Verringerung des Bremsmomentes charakterisiert ist.

7. Verfahren nach Anspruch 5, **dadurch gekennzeichnet, dass** der Beginn des Entleervorganges durch die Abgabe eines Fahrerwunschsignales oder einer Anforderung des Fahrzeugführungsrechners zur Deaktivierung des Retarders charakterisiert ist.

8. Verfahren nach einem der Ansprüche 1 bis 7, **dadurch gekennzeichnet, dass** das gasförmige Medium im entspannten Zustand vorliegt und erst vor der Einbringung in den Arbeitsraum (5; 5.2; 5.3; 5.4a; 5.4b; 5.5) komprimiert wird.

9. Verfahren nach einem der Ansprüche 1 bis 8, **dadurch gekennzeichnet, dass** das gasförmige Medium als Abfallprodukt von pneumatischen Ansteuerungen von Stelleinrichtungen oder anderer Systeme des Antriebssystems, in welches der hydrodynamische Retarder integriert ist, im komprimierten Zustand vorliegt.

10. Verfahren nach einem der Ansprüche 1 bis 9, **dadurch gekennzeichnet, dass** als gasförmiges Medium Luft verwendet wird.

11. Verfahren nach Anspruch 9 oder 10, **dadurch gekennzeichnet, dass** das gasförmige Medium von der Abluft aus der zur pneumatischen Ansteuerung verwendeten Luft einer Ventileinrichtung gebildet wird.

12. Verfahren nach einem der Ansprüche 1 bis 11, **dadurch gekennzeichnet, dass** das gasförmige Medium unter Druck hinsichtlich der Menge und/oder der Größe des Druckes variierbar ist.

13. Verfahren nach Anspruch 12, **dadurch gekennzeichnet, dass** die Variation in vordefinierten Zeitabständen erfolgt.

14. Verfahren nach einem der Ansprüche 1 bis 13, **dadurch gekennzeichnet, dass** die Einbringung von gasförmigem Medium unter Druck in den Arbeitsraum (5; 5.2; 5.3; 5.4a; 5.4b; 5.5) in Impulsen, mindestens jedoch in einem Impuls erfolgt.

15. Verfahren nach einem der Ansprüche 1 bis 14 in einem Retarder (1; 1.2; 1.3; 1.4a; 1.4b; 1.5) mit einem, dem Betriebsmittelauslass (7; 7.2; 7.3; 7.4a; 7.4b; 7.5) nachgeordnetem Auslassraum (33), welchem ein Auslassventil (35) zugeordnet ist, **dadurch gekennzeichnet, dass** das in den Arbeitsraum (5; 5.4a; 5.4b; 5.5) unter Druck eingebrachte gasförmige Medium hinsichtlich seiner Kennwerte Dichte, Druck, Anzahl der Impulse und/oder Temperatur und/oder Volumen derart charakterisiert ist, dass wenigstens eine teilweise Volumenverdrängung des im Auslassraum (33) befindlichen Betriebmittels erzielt wird.

16. Hydrodynamischer Retarder (1; 1.2; 1.3; 1.4a; 1.4b; 1.5) 16.1 mit einem Gehäuse (2);
16.2 mit einem Stator (3; 3.2; 3.3; 3.4a; 3.4b; 3.5) in einem Statorgehäuse und einem Rotor (4; 4.2; 4.3; 4.4a; 4.4b; 4.5), welche miteinander einen Arbeitsraum (5; 5.2; 5.3; 5.4a; 5.4b; 5.5) bilden;
16.3 mit mindestens einem Betriebsmitteleinlass (6; 6.2; 6.3; 6.4a; 6.4b; 6.5) und einem Betriebsmittelauslass (7; 7.2; 7.3; 7.4a; 7.4b; 7.5);
16.4 mit Mitteln (12; 12.2; 12.3; 12.4a; 12.4b; 12.5) zum Einbringen von gasförmigem Medium in den Arbeitsraum (5; 5.2; 5.3; 5.4a; 5.4b; 5.5) zur Erzeugung einer Volumenverdrängung,
**gekennzeichnet durch** die folgenden Merkmale:
16.5 dass der Einlass (17; 17.2; 17.3; 17.4a; 17.5) für das gasförmige Medium vom Betriebsmitteleinlass (6; 6.2; 6.3; 6.4a; 6.4b; 6.5) gebildet wird; und
16.6 mit einer mit dem Betriebsmitteleinlass (6; 6.2; 6.3; 6.4a; 6.4b; 6.5) gekoppelten Leitung;
16.7 mit Mitteln (14) zur wahlweisen Kopplung der mit dem Betriebsmitteleinlass (6; 6.2; 6.3; 6.4a; 6.4b; 6.5) gekoppelten Leitung mit einer Betriebsmittel führenden Leitung (15) oder den Mitteln (12; 12.2; 12.3; 12.4a; 12.4b; 12.5) zur Einbringung gasförmigen Mediums unter Druck in den Arbeitsraum (5; 5.2; 5.3; 5.4a; 5.4b; 5.5);
16.8 mit einer mit dem Betriebsmitteleinlass (6; 6.2; 6.3; 6.4a; 6.4b; 6.5) gekoppelten Leitung und einer, dieser zugeordneten Ventileinrichtung mit mindestens zwei Schaltstellen - einer ersten Schaltstellung und einer zweiten Schaltstellung, wobei in der zweiten Schaltstellung der Betriebsmittelzulauf zum Betriebsmitteleinlass (6; 6.2; 6.3; 6.4a; 6.4b; 6.5) unterbrochen ist; und dass
16.9 die Verbindungsleitung (13) mit der mit dem Betriebsmitteleinlass (6; 6.2; 6.3; 6.4a; 6.4b; 6.5) gekoppelten Leitung zwischen der dieser zugeordneten Ventileinrichtung und dem Betriebsmitteleinlass (6; 6.2; 6.3; 6.4a; 6.4b; 6.5) gekoppelt ist.

17. Hydrodynamischer Retarder (1; 1.2; 1.3; 1.4a; 1.4b; 1.5)
17.1 mit einem Gehäuse (2);
17.2 mit einem Stator (3; 3.2; 3.3; 3.4a; 3.4b; 3.5) in einem Statorgehäuse und einem Rotor (4; 4.2; 4.3; 4.4a; 4.4b; 4.5), welche miteinander einen Arbeitsraum (5; 5.2; 5.3; 5.4a; 5.4b; 5.5) bilden;
17.3 mit mindestens einem Betriebesmitteleinlass (6; 6.2; 6.3; 6.4a; 6.4b; 6.5) und einem Betriebsmittelauslass (7; 7.2; 7.3; 7.4a; 7.4b; 7.5);
17.4 mit Mitteln (12; 12.2, 12.3; 12.4a; 12.4b; 12.5) zum Einbringen von gasförmigem Medium in den Arbeitsraum (5; 5.2; 5.3; 5.4a; 5.4b; 5.5) zur Erzeugung einer Volumenverdrängung;
**gekennzeichnet durch** die folgenden Merkmale:
17.5 die Beschaufelung (10, 11) eines der beiden Schaufelräder - Stator (3; 3.2; 3.3; 3.4a; 3.4b; 3.5) oder Rotor (4; 4.2; 4.3; 4.4a; 4.4b; 4.5) - weist mindestens eine Entlüftungsschaufel (19) auf, welche einen Entlüftungskanal (20) trägt, der einen Kernraum (21) mit einem Raum außerhalb des Stators (3; 3.2; 3.3; 3.4a; 3.4b; 3.5) oder des Rotors (4; 4.2; 4.3; 4.4a; 4.4b; 4.5) verbindet;
17.6 der Einlass (17; 17.2; 17.3; 17.4a; 17.4b; 17.5) für das gasförmige Medium wird von der in den Kernraum mündenden Öffnung bzw. dem Kanal (18) gebildet;
17.7 mit einer mit einem Entlüftungskanal (20) gekoppelten Leitung eines Entlüftungssystems; und
17.8 mit Mitteln (24) zur wahlweisen Kopplung der mit dem Entlüftungskanal (20) gekoppelten Leitung oder den Mitteln (12; 12.2; 12.3; 12.4a; 12.4b; 12.5) zur Einbringung gasförmigen Mediums unter Druck in den Arbeitsraum (5; 5.2; 5.3; 5.4a; 5.4b; 5.5).

18. Hydrodynamischer Retarder (1; 1.2; 1.3; 1.4a; 1.4b; 1.5) nach Anspruch 17, **dadurch gekennzeichnet, dass** den Entlüftungskanälen (20) Mittel (24) zur Steuerung der Funktion als Entlüftungskanal (20) oder Einlass (17; 17.2; 17.3; 17.4a; 17.4b; 17.5) zugeordnet sind.

19. Hydrodynamischer Retarder (1; 1.2; 1.3; 1.4a; 1.4b; 1.5) nach einem der Ansprüche 17 oder 18, **dadurch gekennzeichnet, dass** als gasförmiges Medium Luft verwendet wird.

20. Hydrodynamischer Retarder (1; 1.2; 1.3; 1.4a; 1.4b; 1.5) nach Anspruch 19, **dadurch gekennzeichnet, dass** als gasförmiges Medium die Abluft aus Steuerungsfunktionen und/oder der Ventilsteuerung verwendet wird.

21. Hydrodynamischer Retarder (1; 1.2; 1.3; 1.4a; 1.4b; 1.5) nach einem der Ansprüche 16 bis 20,
**gekennzeichnet durch** die folgenden Merkmale: weiter umfassend
21.1 Mittel (12; 12.2; 12.3; 12.4a; 12.4b; 12.5) zum Einbringen gasförmigen Mediums unter Druck in den Arbeitsraum (5; 5.2; 5.3; 5.4a; 5.4b; 5.5);
21.11 Mittel zur Druckgaserzeugung;
21.12 mindestens eine Verbindungsleitung (13), über welche die Mittel zur Druckgaserzeugung mit dem Einlass (17; 17.2; 17.3; 17.4a; 17.4b; 17.5) für gasförmiges Medium in den Arbeitsraum (5; 5.2; 5.3; 5.4a; 5.4b; 5.5) verbindbar sind.

22. Hydrodynamischer Retarder (alle 1) nach Anspruch 21, **dadurch gekennzeichnet, dass** mindestens ein Speicher für das komprimierte gasförmige Medium vorgesehen ist.

23. Hydrodynamischer Retarder (1; 1.2; 1.3; 1.4a; 1.4b; 1.5) nach Anspruch 22, **gekennzeichnet durch** die folgenden Merkmale:
23.1 die Mittel zur Druckgaserzeugung umfassen mindestens einen Verdichter;
23.2 der Speicher für das komprimierte gasförmige Medium ist als Druckmittelreservoir ausgeführt.

24. Hydrodynamischer Retarder (1; 1.2; 1.3; 1.4a; 1.4b; 1.5) nach Anspruch 23, **dadurch gekennzeichnet, dass** der Verbindungsleitung (13) Mittel zur Steuerung der Verbindung zwischen Speicher und Arbeitsraum (5; 5.2; 5.3; 5.4a; 5.4b; 5.5) vorgesehen sind.

25. Hydrodynamischer Retarder (1; 1.2; 1.3; 1.4a; 1.4b; 1.5) nach Anspruch 22, **dadurch gekennzeichnet, dass** die Mittel zur Druckgaserzeugung von einer pneumatisch angesteuerten Stell- oder Ventileinrichtung gebildet werden, deren Abfallprodukt in Form komprimierter Abluft das komprimierte gasförmige Medium bildet.

26. Hydrodynamischer Retarder (1; 1.2; 1.3; 1.4a; 1.4b; 1.5) nach Anspruch 17, **gekennzeichnet durch** die folgenden Merkmale:
26.1 1 mit einer mit dem Entlüftungskanal (20) gekoppelten Leitung und einer, dieser zugeordneten Ventileinrichtung mit mindestens zwei Schaltstellungen - einer ersten Schaltstellung und einer zweiten Schaltstellung, wobei in der zweiten Schaltstellung der Entlüftungskanal (20) abgesperrt wird;
26.2 die Verbindungsleitung (13) ist mit der mit dem Entlüftungskanal (20) gekoppelten Leitung zwischen der dieser zugeordneten Ventileinrichtung und den Entlüftungsöffnungen am Beginn des Entlüftungskanales (20) gekoppelt.

27. Hydrodynamischer Retarder (1; 1.2; 1.3; 1.4a; 1.4b; 1.5) nach einem der Ansprüche 16 bis 26, **dadurch gekennzeichnet, dass** die Mittel zur Komprimierung des gasförmigen Mediums einen Zylinder umfassen.

28. Hydrodynamischer Retarder (1; 1.2; 1.3; 1.4a; 1.4b; 1.5) nach einem der Ansprüche 16 bis 27, **dadurch gekennzeichnet, dass** die Mittel (12; 12.2; 12.3; 12.4a; 12.4b; 12.5) zum Einbringen von gasförmigem Medium in den Arbeitsraum (5; 5.2; 5.3; 5.4a; 5.4b; 5.5) steuerbar sind.

29. Hydrodynamischer Retarder (1; 1.2; 1.3; 1.4a; 1.4b; 1.5) nach einem der Ansprüche 16 bis 28, **dadurch gekennzeichnet, dass** die Mittel (12; 12.2; 12.3; 12.4a; 12.4b; 12.5) zur Einbringung von gasförmigem Medium in den Arbeitsraum Mittel zur Erzeugung von Druckimpulsen umfassen.

30. Hydrodynamischer Retarder (1; 1.2; 1.3; 1.4a; 1.4b; 1.5) nach Anspruch 29, **dadurch gekennzeichnet, dass** die Mittel zur Erzeugung von Druckimpulsen einen Druckimpulszylinder (28) umfassen.

31. Hydrodynamischer Retarder (1; 1.2; 1.3; 1.4a; 1.4b; 1.5) nach Anspruch 30, **dadurch gekennzeichnet, dass** der Druckimpulszylinder (28) einen druckbeaufschlagten Kolben (29) umfasst.

32. Hydrodynamischer Retarder (1; 1.2; 1.3; 1.4a; 1.4b; 1.5) nach einem der Ansprüche 16 bis 31, **dadurch gekennzeichnet, dass** Mittel zum Einstellen eines optimalen Füllungsgrades vorgesehen sind, welche bei Ausführungen ohne einen erweiterten Arbeitsraum einen Betriebsmittelauslass (7; 7.2; 7.3; 7.4a; 7.4b; 7.5) umfassen, der radial innenliegend und damit der Fliehkraft entgegenstehend im Arbeitsraum angeordnet ist, und bei Ausführungen mit einem hinter dem Stator angeordneten und den Arbeitsraum erweiterten Arbeitsraum einen Auslass umfassen, der an einem geodätisch erhöhten Ort angeordnet ist, so dass bei sich entleerender Bremseinrichtung ab einem vorbestimmten optimalen Füllungsgrad keine Arbeitsflüssigkeit im Arbeitsraum mehr ansteht.

33. Hydrodynamischer Retarder (1; 1.2; 1.3; 1.4a; 1.4b; 1.5) nach Anspruch 32, **dadurch gekennzeichnet, dass** der Betriebsmittelauslass oder der Auslass waagerecht in einer Höhe h angeordnet ist.

34. Hydrodynamischer Retarder (1; 1.2; 1.3; 1.4a; 1.4b; 1.5) nach Anspruch 32, **dadurch gekennzeichnet, dass** der Betriebsmittelauslass aus dem Arbeitsraum oder der Auslass aus dem erweiterten Arbeitsraum ein senkrecht in den Arbeitsraum (5; 5.2; 5.3; 5.4a; 5.4b; 5.5) bzw. den erweiterten Arbeitsraum mit der Höhe h hineinreichendes Rohr umfasst.

35. Hydrodynamischer Retarder (1; 1.2; 1.3; 1.4a; 1.4b; 1.5) nach einem der Ansprüche 32 bis 34, **dadurch gekennzeichnet, dass** einem hinter dem Arbeitsraum oder dem erweitertem Arbeitsraum angeordneten Auslassraum ein Auslass zugeordnet ist, welchem ein Auslassventil zugeordnet ist.

## Claims

1. A method for accelerating the emptying of operating material from the work chamber (5; 5.2; 5.3; 5.4a; 5.4b; 5.5) of a hydrodynamic retarder (1; 1.2; 1.3; 1.4a; 1.4b; 1.5), which is formed between a rotor (4; 4.2; 4.3; 4.4a; 4.4b; 4.5) and a stator (3; 3.2; 3.3; 3.4a; 3.4b; 3.5), gaseous medium being introduced into the work chamber (5; 5.2; 5.3; 5.4a; 5.4b; 5.5) during an emptying procedure and inducing a volume displacement, **characterized in that** the gaseous medium is introduced into the work chamber (5; 5.2; 5.3; 5.4a; 5.4b; 5.5) via the operating material inlet (6; 6.2; 6.3; 6.4a; 6.4b; 6.5), or in which the blading (10, 11) of stator and/or rotor (3; 3.2; 3.3; 3.4a; 3.4b; 3.5; 4; 4.2; 4.3; 4.4a; 4.4b; 4.5) has at least one ventilation channel (20), which discharges into the blade base (8, 9) and therefrom into a chamber outside the blade wheel, the gaseous medium being introduced via the ventilation channel (20) into the work chamber (5; 5.4a; 5.4b; 5.5).

2. The method according to Claim 1, **characterized in that** the gaseous medium is introduced into the work chamber (5; 5.2; 5.3; 5.4a; 5.4b; 5.5) under pressure.

3. The method according to Claim 2, **characterized in that** the amount of operating material residue remaining in the work chamber (5; 5.2; 5.3; 5.4a; 5.4b; 5.5) is set in a targeted way by changing the dimension of the pressure.

4. The method according to one of Claims 1 through 3, **characterized in that** the gaseous medium is suctioned in because of the rotor blade wheel rotation.

5. The method according to one of Claims 1 through 4, **characterized in that** the medium is introduced into the work chamber (5; 5.2; 5.3; 5.4a; 5.4b; 5.5) simultaneously or with a slight delay to the initiation of the emptying procedure.

6. The method according to Claim 5, **characterized in that** the beginning of the emptying procedure is distinguished by the output of a driver command signal or a request of the vehicle handling computer to reduce the braking torque.

7. The method according to Claim 5, **characterized in that** the beginning of the emptying procedure is distinguished by the output of a driver command signal or a request of the vehicle handling computer to deactivate the retarder.

8. The method according to one Claims 1 through 7, **characterized in that** the gaseous medium is provided in the relaxed state and is first compressed before being introduced into the work chamber (5; 5.2; 5.3; 5.4a; 5.4b; 5.5).

9. The method according to one of Claims 1 through 8, **characterized in that** the gaseous medium is provided in the compressed state as a waste product of pneumatic activations of actuators or other systems of the drive system in which the hydrodynamic retarder is integrated.

10. The method according to one of Claims 1 through 9, **characterized in that** air is used as the gaseous medium.

11. The method according to Claim 9 or 10, **characterized in that** the gaseous medium is produced from the exhaust air from the air used for pneumatic activation of a valve unit.

12. The method according to one of Claims 1 through 11, **characterized in that** the gaseous medium under pressure is variable in regard to the amount and/or the dimension of the pressure.

13. The method according to Claim 12, **characterized in that** the variation occurs in predefined time intervals.

14. The method according to one of Claims 1 through 13, **characterized in that** the introduction of gaseous medium under pressure into the work chamber (5; 5.2; 5.3; 5.4a; 5.4b; 5.5) occurs in pulses, but at least in one pulse.

15. The method according to one of Claims 1 through 14 in a retarder (1; 1.2; 1.3; 1.4a; 1.4b; 1.5) having an outlet chamber (33), situated downstream from the operating material outlet (7; 7.2; 7.3; 7.4a; 7.4b; 7.5), to which an outlet valve (35) is assigned, **characterized in that** the gaseous medium introduced into the work chamber (5; 5.4a; 5.4b; 5.5) under pressure is **characterized in** regard to its characteristic values of density, pressure, number of pulses, and/or temperature and/or volume in such a way that at least partial volume displacement of the operating material located in the outlet chamber (33) is achieved.

16. A hydrodynamic retarder (1; 1.2; 1.3; 1.4a; 1.4b; 1.5)
16.1 having a housing (2);
16.2 having a stator (3; 3.2; 3.3; 3.4a; 3.4b; 3.5) and a stator housing and a rotor (4; 4.2; 4.3; 4.4a; 4.4b; 4.5) which form a work chamber (5; 5.2; 5.3; 5.4a; 5.4b; 5.5) together with one another;
16.3 having at least one operating material inlet (6; 6.2; 6.3; 6.4a; 6.4b; 6.5) and one operating material outlet (7; 7.2; 7.3; 7.4a; 7.4b; 7.5);
16.4 having means (12; 12.2; 12.3; 12.4a; 12.4b; 12.5) for introducing gaseous medium into the work chamber (5; 5.2; 5.3; 5.4a; 5.4b; 5.5) to generate a volume displacement,
**characterized by** the following features:
16.5 the inlet (17; 17.2; 17.3; 17.4a; 17.5) for the gaseous medium is formed by the operating material inlet (6; 6.2; 6.3; 6.4a; 6.4b; 6.5); and
16.6 having a line coupled to the operating material inlet (6; 6.2; 6.3; 6.4a; 6.4b; 6.5);
16.7 having means (14) for alternately coupling the line coupled to the operating material inlet (6; 6.2; 6.3; 6.4a; 6.4b; 6.5) to a line (15) leading to an operating material or the means (12; 12.2; 12.3; 12.4a; 12.4b; 12.5) for introducing gaseous medium into the work chamber (5; 5.2; 5.3; 5.4a; 5.4b; 5.5) under pressure;
16.8 having a line coupled to the operating material inlet (6; 6.2; 6.3; 6.4a; 6.4b; 6.5) and a valve unit assigned thereto having at least two switch positions - a first switch position and a second switch position - the operating material supply to the operating material inlet (6; 6.2; 6.3; 6.4a; 6.4b; 6.5) being interrupted in the second switch position; and
16.9 the connection line (13) is coupled to the line coupled to the operating material inlet (6; 6.2; 6.3; 6.4a; 6.4b; 6.5) between the valve unit assigned thereto and the operating material inlet (6; 6.2; 6.3; 6.4a; 6.4b; 6.5).

17. A hydrodynamic retarder (1; 1.2; 1.3; 1.4a; 1.4b; 1.5)
17.1 having a housing (2);
17.2 having a stator (3; 3.2; 3.3; 3.4a; 3.4b; 3.5) and a stator housing and a rotor (4; 4.2; 4.3; 4.4a; 4.4b; 4.5) which form a work chamber (5; 5.2; 5.3; 5.4a; 5.4b; 5.5) together with one another;
17.3 having at least one operating material inlet (6; 6.2; 6.3; 6.4a; 6.4b; 6.5) and one operating material outlet (7; 7.2; 7.3; 7.4a; 7.4b; 7.5);
17.4 having means (12; 12.2; 12.3; 12.4a; 12.4b; 12.5) for introducing gaseous medium into the work chamber (5; 5.2; 5.3; 5.4a; 5.4b; 5.5) to generate a volume displacement,
**characterized by** the following features:
17.5 the blading (10, 11) of one of the two blade wheels - stator (3; 3.2; 3.3; 3.4a; 3.4b; 3.5) or rotor (4; 4.2; 4.3; 4.4a; 4.4b; 4.5) - has at least one ventilation blade (19), which carries a ventilation channel (20), which connects a core chamber (21) to a chamber outside the stator (3; 3.2; 3.3; 3.4a; 3.4b; 3.5) or the rotor (4; 4.2; 4.3; 4.4a; 4.4b; 4.5);
17.6 the inlet (17; 17.2; 17.3; 17.4a; 17.4b; 17.5) for the gaseous medium is formed by the opening or the channel (18) discharging into the core chamber;
17.7 having a line of a ventilation system coupled to a ventilation channel (20); and
17.8 having means (24) for alternately coupling the line coupled to the ventilation channel (20) or the means (12; 12.2; 12.3; 12.4a; 12.4b; 12.5) for introducing gaseous medium into the work chamber (5; 5.2; 5.3; 5.4a; 5.4b; 5.5) under pressure.

18. The hydrodynamic retarder (1; 1.2; 1.3; 1.4a; 1.4b; 1.5) according to Claim 17, **characterized in that** means (24) for controlling the function as ventilation channel (20) or inlet (17; 17.2; 17.3; 17.4a; 17.4b; 17.5) are assigned to the ventilation channels (20).

19. The hydrodynamic retarder (1; 1.2; 1.3; 1.4a; 1.4b; 1.5) according to one of Claims 17 or 18, **characterized in that** air is used as the gaseous medium.

20. The hydrodynamic retarder (1; 1.2; 1.3; 1.4a; 1.4b; 1.5) according to Claim 19, **characterized in that** the exhaust air from control functions and/or the valve controller is used as the gaseous medium.

21. The hydrodynamic retarder (1; 1.2; 1.3; 1.4a; 1.4b; 1.5) according to one of Claims 16 through 20,
further comprising:
21.1 means (12; 12.2; 12.3; 12.4a; 12.4b; 12.5) for introducing gaseous medium into the work chamber (5; 5.2; 5.3; 5.4a; 5.4b; 5.5) under pressure;
21.11 means for pressurized gas generation;
21.12 at least one connection line (13), via which the means for pressurized gas generation are connectable to the inlet (17; 17.2; 17.3; 17.4a; 17.4b; 17.5) for gaseous medium in the work chamber (5; 5.2; 5.3; 5.4a; 5.4b; 5.5).

22. The hydrodynamic retarder (all 1) according to Claim 21, **characterized in that** at least one accumulator for the compressed gaseous medium is provided.

23. The hydrodynamic retarder (1; 1.2; 1.3; 1.4a; 1.4b; 1.5) according to Claim 22, **characterized by** the following features:
23.1 the means for pressurized gas generation comprise at least one compressor;
23.2 the accumulator for the compressed gaseous medium is implemented as a pressurized medium reservoir.

24. The hydrodynamic retarder (1; 1.2; 1.3; 1.4a; 1.4b; 1.5) according to Claim 23, **characterized in that** means for controlling the connection between accumulator and work chamber (5; 5.2; 5.3; 5.4a; 5.4b; 5.5) are provided to the connection line (13).

25. The hydrodynamic retarder (1; 1.2; 1.3; 1.4a; 1.4b; 1.5) according to Claim 22, **characterized in that** the means for pressurized gas generation are formed by a pneumatically activated actuating or valve unit, whose waste product, in the form of compressed exhaust air, forms the compressed gaseous medium.

26. The hydrodynamic retarder (1; 1.2; 1.3; 1.4a; 1.4b; 1.5) according to Claim 17, **characterized by** the following features:
26.1 having a line coupled to the ventilation channel (20) and a valve unit assigned thereto having at least two switch positions - a first switch position and a second switch position - the ventilation channel (20) being blocked in the second switch position;
26.2 the connection line (13) is coupled to the line coupled to the ventilation channel (20) between the valve unit assigned thereto and the ventilation openings at the beginning of the ventilation channel (20).

27. The hydrodynamic retarder (1; 1.2; 1.3; 1.4a; 1.4b; 1.5) according to one of Claims 16 through 26, **characterized in that** the means for compressing the gaseous medium comprise a cylinder.

28. The hydrodynamic retarder (1; 1.2; 1.3; 1.4a; 1.4b; 1.5) according to one of Claims 16 through 27, **characterized in that** the means (12; 12.2; 12.3; 12.4a; 12.4b; 12.5) for introducing gaseous medium into the work chamber (5; 5.2; 5.3; 5.4a; 5.4b; 5.5) under pressure are controllable.

29. The hydrodynamic retarder (1; 1.2; 1.3; 1.4a; 1.4b; 1.5) according to one of Claims 16 through 28, **characterized in that** the means (12; 12.2; 12.3; 12.4a; 12.4b; 12.5) for introducing gaseous medium into the work chamber comprise means for generating pressure pulses.

30. The hydrodynamic retarder (1; 1.2; 1.3; 1.4a; 1.4b; 1.5) according to Claim 29, **characterized in that** the means for generating pressure pulses comprise a pressure pulse cylinder (28).

31. The hydrodynamic retarder (1; 1.2; 1.3; 1.4a; 1.4b; 1.5) according to Claim 30, **characterized in that** the pressure pulse cylinder (28) comprises a pressure-impinged piston (29).

32. The hydrodynamic retarder (1; 1.2; 1.3; 1.4a; 1.4b; 1.5) according to one of Claims 16 through 31, **characterized in that** means for setting an optimum degree of filling are provided, which, in embodiments without an expanded work chamber, comprise an operating material outlet (7; 7.2; 7.3; 7.4a; 7.4b; 7.5) which is situated radially on the interior, and thus opposing the centrifugal force, in the work chamber, and in embodiments having a work chamber situated behind the stator and expanding the work chamber, comprise an outlet, which is situated at a geodetically elevated location in such a way that when the brake unit is emptying, from a predetermined optimum degree of filling, work fluid no longer accumulates in the work chamber.

33. The hydrodynamic retarder (1; 1.2; 1.3; 1.4a; 1.4b; 1.5) according to Claim 32, **characterized in that** the operating material outlet or the outlet is situated horizontally at a height h.

34. The hydrodynamic retarder (1; 1.2; 1.3; 1.4a; 1.4b; 1.5) according to Claim 32, **characterized in that** the operating material outlet from the work chamber or the outlet from the expanded work chamber comprises a pipe extending perpendicularly into the work chamber (5; 5.2; 5.3; 5.4a; 5.4b; 5.5) or the expanded work chamber at the height h.

35. The hydrodynamic retarder (1; 1.2; 1.3; 1.4a; 1.4b; 1.5) according to one of Claims 32 through 34, **characterized in that** an outlet, to which an outlet valve is assigned, is assigned to an outlet chamber situated behind the work chamber or the expanded work chamber.

## Revendications

1. Procédé pour accélérer la vidange de fluide de travail de l'espace de travail (5; 5.2, 5.3; 5.4a; 5.4b; 5.5) d'un retardateur hydrodynamique (1; 1.2; 1.3; 1.4a; 1.4b; 1.5), qui est formé entre un rotor (4; 4.2; 4.3; 4.4a; 4.4b; 4.5) et un stator (3; 3.2; 3.3; 3.4a; 3.4b; 3.5), un fluide gazeux étant introduit pendant une opération de vidange dans l'espace de travail (5; 5.2; 5.3; 5.4a; 5.4b; 5.5) et induisant un refoulement du volume, **caractérisé en ce que** le fluide gazeux est introduit dans l'espace de travail (5; 5.2; 5.3; 5.4a; 5.415; 5.5) en passant par l'entrée de fluide de travail (6; 6.2; 6.3; 6.4a; 6.4b; 6.5), ou dans lequel l'aubage (10, 11) du stator et/ou du rotor (3; 3.2; 3.3; 3.4a; 3.4b; 3.5; 4; 4.2; 4.3; 4.4a; 4.4b; 4.5) comporte au moins un canal d'extraction d'air (20), qui débouche dans le fond des aubes (8, 9) et, partant de celui-ci, dans un espace situé à l'extérieur de la roue à aubes, le fluide gazeux étant introduit dans l'espace de travail (5; 5.4a; 5.4b; 5.5) par le canal d'extraction d'air (20).

2. Procédé selon la revendication 1, **caractérisé en ce que** le fluide gazeux est introduit sous pression dans l'espace de travail (5; 5.2; 5.3; 5.4a; 5.4b; 5.5).

3. Procédé selon la revendication 2, **caractérisé en ce que** la quantité de fluide de travail restant dans l'espace de travail (5; 5.2; 5.3; 5.4a; 5.4b; 5.5) est ajustée volontairement au moyen d'une modification de la pression.

4. Procédé selon l'une des revendications 1 à 3, **caractérisé en ce que** le fluide gazeux est aspiré sous l'effet de la rotation des roues à aubes.

5. Procédé selon l'une des revendications 1 à 4, **caractérisé en ce que** l'introduction du fluide dans l'espace de travail (5; 5.2; 5.3; 5.4a; 5.4b; 5.5) a lieu en même temps que le début de l'opération de vidange ou avec un léger retard.

6. Procédé selon la revendication 5, **caractérisé en ce que** le début de l'opération de vidange est **caractérisé par** l'émission d'un signal indiquant un souhait du conducteur ou une commande de l'ordinateur de contrôle du véhicule visant à réduire le moment de freinage.

7. Procédé selon la revendication 5, **caractérisé en ce que** le début de l'opération de vidange est **caractérisé par** l'émission d'un signal indiquant un souhait du conducteur ou une commande de l'ordinateur de contrôle du véhicule visant à désactiver le retardateur.

8. Procédé selon l'une des revendications 1 à 7, **caractérisé en ce que** le fluide gazeux est détendu et n'est compressé qu'avant son introduction dans l'espace de travail (5; 5.2; 5.3; 5.4a; 5.4b; 5.5).

9. Procédé selon l'une des revendications 1 à 8, **caractérisé en ce que** le fluide gazeux est présent à l'état comprimé sous la forme d'un produit dérivé des actionnements pneumatiques de dispositifs de réglage ou d'autres systèmes du système de propulsion dans lequel le retardateur hydrodynamique est intégré.

10. Procédé selon l'une des revendications 1 à 9, **caractérisé en ce que** le fluide gazeux utilisé est de l'air.

11. Procédé selon la revendication 9 ou 10, **caractérisé en ce que** le fluide gazeux est formé par l'air usagé de l'air d'une installation de soupapes utilisé pour l'actionnement pneumatique.

12. Procédé selon l'une des revendications 1 à 11, **caractérisé en ce que** le fluide gazeux sous pression est variable en ce qui concerne sa quantité et/ou sa pression.

13. Procédé selon la revendication 12, **caractérisé en ce que** la variation se produit à intervalles prédéfinis dans le temps.

14. Procédé selon l'une des revendications 1 à 13, **caractérisé en ce que** l'introduction de fluide gazeux sous pression dans l'espace de travail (5; 5.2; 5.3; 5.4a; 5.4b; 5.5) a lieu par impulsions, mais au moins en une impulsions.

15. Procédé selon l'une des revendications 1 à 14 dans un retardateur (1; 1.2; 1.3; 1.4a; 1.4b; 1.5) avec une chambre de sortie (33) faisant suite à la sortie de fluide de travail (7; 7.2; 7.3; 7.4a; 7.4b; 7.5), qui est associée à une soupape de sortie (35), **caractérisé en ce que** le fluide gazeux introduit sous pression dans l'espace de travail (5; 5.4a; 5.4b; 5.5) est **caractérisé**, en ce qui concerne ses valeurs de densité, de pression, de nombre d'impulsions et/ou de température et/ou de volume, de façon à obtenir un refoulement au moins partiel du volume du fluide de travail qui se trouve dans la chambre de sortie (33).

16. Retardateur hydrodynamique (1; 1.2; 1.3; 1.4a; 1.4b; 1.5)
16.1 1 avec un boîtier (2) ;
16.2 avec un stator (3; 3.2; 3.3; 3.4a; 3.4b; 3.5) dans un corps de stator et un rotor (4; 4.2; 4.3; 4.4a; 4.4b; 4.5), qui forment ensemble un espace de travail (5; 5.2; 5.3; 5.4a; 5.4b; 5.5) ;
16.3 avec au moins une entrée de fluide de travail (6; 6.2; 6.3; 6.4a; 6.4b; 6.5) et une sortie de fluide de travail (7; 7.2; 7.3; 7.4a; 7.4b; 7.5) ;
16.4 avec des moyens (12; 12.2; 12.3; 12.4a; 12.4b; 12.5) pour introduire un fluide gazeux dans l'espace de travail (5; 5.2; 5.3; 5.4a; 5.4b; 5.5) afin d'obtenir un refoulement du volume,
**caractérisé en ce que** :
16.5 l'entrée (17; 17.2; 17.3; 17.4a; 17.5) pour le fluide gazeux est formée par l'entrée de fluide de travail (6; 6.2; 6.3; 6.4a; 6.4b; 6.5) ; et
16.6 avec une conduite raccordée à l'entrée de fluide de travail (6; 6.2; 6.3; 6.4a; 6.4b; 6.5) ;
16.7 avec des moyens (14) pour le couplage sélectif de la conduite raccordée à l'entrée de fluide de travail (6; 6.2; 6.3; 6.4a; 6.4b; 6.5) sur une conduite (15) acheminant du fluide de travail ou sur les moyens (12; 12.2; 12.3; 12.4a; 12.4b; 12.5) pour introduire du fluide gazeux sous pression dans l'espace de travail (5; 5.2; 5.3; 5.4a; 5.4b; 5.5) ;
16.8 avec une conduite raccordée à l'entrée de fluide de travail (6; 6.2; 6.3; 6.4a; 6.4b; 6.5) et un dispositif de soupape associé à celle-ci avec au moins deux positions de déplacement, une première position de déplacement et une deuxième position de déplacement, l'arrivée de fluide de travail à l'entrée de fluide de travail (6; 6.2; 6.3; 6.4a; 6.4b; 6.5) étant interrompue dans la deuxième position de déplacement ;
et **en ce que**
16.9 la conduite de liaison (13) est raccordée à la conduite raccordée à l'entrée de fluide de travail (6;6.2; 6.3; 6.4a; 6.4b; 6.5) entre le dispositif de soupape associé à celle-ci et l'entrée de fluide de travail (6; 6.2; 6.3; 6.4a; 6.4b; 6.5).

17. Retardateur hydrodynamique (1; 1.2; 1.3; 1.4a; 1.4b; 1.5)
17.1 avec un boîtier (2) ;
17.2 avec un stator (3; 3.2; 3.3; 3.4a; 3.4b; 3.5) dans un corps de stator et un rotor (4; 4.2; 4.3; 4.4a; 4.4b; 4.5), qui forment ensemble un espace de travail (5; 5.2; 5.3; 5.4a; 5.4b; 5.5) ;
17.3 avec au moins une entrée de fluide de travail (6; 6.2; 6.3; 6.4a; 6.4b; 6.5) et une sortie de fluide de travail (7; 7.2; 7.3; 7.4a; 7.4b; 7.5) ;
17.4 avec des moyens (12; 12.2; 12.3; 12.4a; 12.4b; 12.5) pour introduire un fluide gazeux dans l'espace de travail (5; 5.2; 5.3; 5.4a; 5.4b; 5.5) afin d'obtenir un refoulement du volume ;
**caractérisé en ce que** :
17.5 l'aubage (10, 11) de l'une des deux roues à aubes du stator (3; 3.2; 3.3; 3.4a; 3.4b; 3.5) ou du rotor (4; 4.2; 4.3; 4.4a; 4.4b; 4.5) présente au moins une aube d'extraction d'air (19), qui porte un canal d'extraction d'air (20) reliant un espace central (21) avec un espace situé à l'extérieur du stator (3; 3.2; 3.3; 3.4a; 3.4b; 3.5) ou du rotor (4; 4.2; 4.3; 4.4a; 4.4b; 4.5) ;
17.6 l'entrée (17; 17.2; 17.3; 17.4a; 17.4b; 17.5) pour le fluide gazeux est formée par l'ouverture ou le canal (18) débouchant dans l'espace central ;
17.7 avec une conduite d'un système d'extraction d'air raccordée à un canal d'extraction d'air (20) ; et
17.8 avec des moyens (24) pour le raccordement sélectif de la conduite raccordée au canal d'extraction d'air (20) ou aux moyens (12; 12.2; 12.3; 12.4a; 12.4b; 12.5) pour introduire du fluide gazeux sous pression dans l'espace de travail (5; 5,2, 5.3; 5.4a; 5.4b; 5.5).

18. Retardateur hydrodynamique (1; 1.2; 1.3; 1.4a; 1.4b; 1.5) selon la revendication 17, **caractérisé en ce que** les canaux d'extraction d'air (20) sont associés à des moyens (24) pour contrôler la fonction de canal d'extraction d'air (20) ou d'entrée (17; 17.2; 17.3; 17.4a; 17.4b; 17.5).

19. Retardateur hydrodynamique (1; 1.2; 1.3; 1.4a; 1.4b; 1.5) selon l'une des revendications 17 ou 18, **caractérisé en ce que** le fluide gazeux utilisé est de l'air.

20. Retardateur hydrodynamique (1.1; 1.2; 1.3; 1.4a; 1.4b; 1.5) selon la revendication 19, **caractérisé en ce que** le fluide gazeux est l'air sortant de fonctions de commande et/ou de la commande de soupapes.

21. Retardateur hydrodynamique (1; 1.2; 1.3; 1.4a; 1.4b; 1.5) selon l'une des revendications 16 à 20, **caractérisé en ce qu'**il comprend en outre :
21.1 des moyens (12; 12.2; 12.3; 12.4a; 12.4b; 12.5) pour introduire du fluide gazeux sous pression dans l'espace de travail (5; 5.2; 5.3; 5.4a; 5.46; 5.5) ;
21.11 des moyens pour la production de gaz sous pression ;
21.12 au moins une conduite de liaison (13), par laquelle les moyens pour la production de gaz sous pression peuvent être reliés à une entrée (17; 17.2; 17.3; 17.4a; 17.4b; 17.5) de fluide gazeux dans l'espace de travail (5; 5.2; 5.3; 5.4a; 5.4b; 5.5).

22. Retardateur hydrodynamique (1 dans l'ensemble) selon la revendication 21, **caractérisé en ce qu'**il est prévu au moins un accumulateur pour le fluide gazeux comprimé.

23. Retardateur hydrodynamique (1; 1.2; 1.3; 1.4a; 1.4b; 1.5) selon la revendication 22, **caractérisé en ce que** :
23.1 les moyens pour la production de gaz sous pression comprennent au moins un compresseur ;
23.2 l'accumulateur pour le fluide gazeux comprimé est conformé comme un réservoir de fluide sous pression.

24. Retardateur hydrodynamique (1; 1.2; 1.3; 1.4a; 1.4b; 1.5) selon la revendication 23, **caractérisé en ce que** la conduite de liaison (13) est associée à des moyens pour commander la liaison entre l'accumulateur et l'espace de travail (5; 5.2; 5.3; 5.4a; 5.4b; 5.5).

25. Retardateur hydrodynamique (1; 1.2; 1.3; 1.4a; 1.4b; 1.5) selon la revendication 22, **caractérisé en ce que** les moyens pour la production de gaz sous pression comprennent un dispositif de régulateur ou de soupape à actionnement pneumatique, dont le produit dérivé forme, sous la forme d'air sortant comprimé, le fluide gazeux comprimé.

26. Retardateur hydrodynamique (1; 1.2; 1.3; 1.4a; 1.4b; 1.5) selon la revendication 17, **caractérisé en ce que** :
26.1 il comporte une conduite raccordée au canal d'extraction d'air (20) et un dispositif de soupape associé à celle-ci avec au moins deux positions de déplacement, une première position de déplacement et une deuxième position de déplacement, la deuxième position de déplacement fermant le canal d'extraction d'air (20) ;
26.2 la conduite de liaison (13) est raccordée à la conduite raccordée au canal d'extraction d'air (20) entre le dispositif de soupape associé à celui-ci et les ouvertures d'extraction d'air au début du canal d'extraction d'aire (20).

27. Retardateur hydrodynamique (1; 1.2; 1.3; 1.4a; 1.4b; 1.5) selon l'une des revendications 16 à 26, **caractérisé en ce que** les moyens pour comprimer le fluide gazeux comprennent un vérin.

28. Retardateur hydrodynamique (1; 1.2, 1.3; 1.4a; 1.4b; 1.5) selon l'une des revendications 16 à 27, **caractérisé en ce que** les moyens (12; 12.2; 12.3; 12.4a; 12.4b; 12.5) pour introduire du fluide gazeux dans l'espace de travail (5; 5.2; 5.3; 5.4a; 5.4b; 5.5) peuvent être régulés.

29. Retardateur hydrodynamique (1; 1.2; 1.3; 1.4a; 1.4b; 1.5) selon l'une des revendications 16 à 28, **caractérisé en ce que** les moyens (12; 12.2; 12.3; 12.4a; 12.4b; 12.5) pour introduire du fluide gazeux dans l'espace de travail comprennent des moyens pour produire des impulsions de pression.

30. Retardateur hydrodynamique (1; 1.2; 1.3; 1.4a; 1.4b; 1.5) selon la revendication 29, **caractérisé en ce que** les moyens pour produire des impulsions de pression comprennent un vérin à impulsions de pression (28).

31. Retardateur hydrodynamique (1; 1.2; 1.3; 1.4a; 1.4b; 1.5) selon la revendication 30, **caractérisé en ce que** le vérin à impulsions de pression (28) comprend un piston (29) soumis à une pression.

32. Retardateur hydrodynamique (1; 1.2; 1.3; 1.4a; 1.4b; 1.5) selon l'une des revendications 16 à 31, **caractérisé en ce qu'**il est prévu des moyens pour régler un niveau de remplissage optimal, qui comprennent, dans les modes de réalisation sans espace de travail élargi, une sortie de fluide de travail, (7; 7.2; 7.3; 7.4a; 7.4b; 7.5) disposée à l'intérieur dans le sens radial dans l'espace de travail, donc face à la force centrifuge, et dans les modes de réalisation avec un espace de travail disposé derrière le stator et élargi, une sortie disposée en un point surélevé du point de vue géodésique, de sorte que lorsque le dispositif de freinage se vide, à partir d'un niveau de remplissage optimal prédéterminé, il n'y a plus de fluide de travail dans l'espace de travail.

33. Retardateur hydrodynamique (1; 1.2; 1.3; 1.4a; 1.4b; 1.5) selon la revendication 32, **caractérisé en ce que** la sortie de fluide de travail ou la sortie est disposée horizontalement à une hauteur h.

34. Retardateur hydrodynamique (1; 1.2; 1.3; 1.4a; 1.4b; 1.5) selon la revendication 32, **caractérisé en ce que** la sortie de fluide de travail hors de l'espace de travail ou la sortie de l'espace de travail élargi comprend un tuyau pénétrant dans l'espace de travail (5; 5.2; 5.3; 5.4a; 5.4b; 5.5) ou l'espace de travail élargi à la hauteur h.

35. Retardateur hydrodynamique (1; 1.2; 1.3; 1.4a; 1.4b; 1.5) selon l'une des revendications 32 à 34, **caractérisé en ce qu'**il est prévu dans la chambre de sortie disposée derrière l'espace de travail ou l'espace de travail élargi une sortie associée à une soupape de sortie.
